(19)

Europäisches
Patentamt

European
Patent Office

Office européen
des brevets

(11) **EP 4 704 417 A1**

(12) **EUROPEAN PATENT APPLICATION**
published in accordance with Art. 153(4) EPC

(43) Date of publication:
**04.03.2026 Bulletin 2026/10**

(21) Application number: **23934557.2**

(22) Date of filing: **27.04.2023**

(51) International Patent Classification (IPC):
**H04N 19/103** (2014.01)      **H04N 19/159** (2014.01)
**H04N 19/186** (2014.01)

(52) Cooperative Patent Classification (CPC):
**H04N 19/103; H04N 19/159; H04N 19/186**

(86) International application number:
**PCT/CN2023/091305**

(87) International publication number:
**WO 2024/221361 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HUANG, Hang
Dongguan, Guangdong 523860 (CN)**

(74) Representative: **Penza, Giancarlo
Bugnion S.p.A.
Viale Lancetti, 17
20158 Milano (IT)**

(54) **CODING METHOD, DECODING METHOD, CODE STREAM, CODER, DECODER AND
STORAGE MEDIUM**

(57)      Disclosed in the embodiments of the present application are a coding method, a decoding method, a code stream, a coder, a decoder and a storage medium. The decoding method comprises: decoding a code stream, and determining the value of first syntax identification information; if the first syntax identification information indicates that the current block uses a weighted chroma fusion mode, decoding the code stream, and determining the value of second syntax identification information; if the second syntax identification information indicates that the current block uses a chroma fusion export mode, decoding the code stream, and determining an index identification value of the current block; and constructing a candidate parameter list of the current block, and determining a model parameter of the current block according to the candidate parameter list and the index identification value, wherein the model parameter is used for determining a first predicted value, which is based on a cross-component prediction mode, of the current block. Thus, the prediction accuracy of the chroma fusion mode can be improved, such that the coding and decoding efficiency can be improved.

| | |
|---|---|
| The bitstream is decoded to determine a value of first syntax identification information | S901 |
| When the first syntax identification information indicates that a weighted chroma fusion mode is used for a current block, the bitstream is decoded to determine a value of second syntax identification information | S902 |
| When the second syntax identification information indicates that a chroma fusion derivation mode is used for the current block, the bitstream is decoded to determine an index identification value of the current block | S903 |
| A parameter candidate list of the current block is constructed, and a model parameter of the current block is determined according to the parameter candidate list and the index identification value. The model parameter is used to determine a first prediction value of the current block based on a cross-component prediction mode | S904 |

**FIG. 9**

**Description**

TECHNICAL FIELD

Embodiments of the present disclosure relate to the technical field of point cloud encoding and decoding, and in particular to an encoding and decoding method, a bitstream, an encoder, a decoder, and a storage medium.

BACKGROUND

Based on the latest video coding standard H.266/Versatile Video Coding (VVC) Test Model (VTM), the Joint Video Experts Team (JVET) proposed a new generation of reference software model, that is, the Enhanced Compression Model (ECM).

In the ECM, the prediction section may include multiple modes, which include a luma prediction mode and a chroma prediction mode. The chroma prediction mode may be classified into two types (i.e., a cross-component prediction mode and a non-cross-component prediction mode). In the chroma fusion mode, when the chroma fusion mode is used for the current block, the model parameter of the cross-component prediction mode is relatively simple, which prevents the full utilization of the advantages of the cross-component prediction, thereby resulting in low encoding efficiency.

SUMMARY

Embodiments of the present disclosure provide an encoding and decoding method, a bitstream, an encoder, a decoder, and a storage medium, which can improve prediction accuracy of the chroma fusion mode, thereby improving the encoding and decoding efficiency.

The technical schemes of the embodiments of the present disclosure may be implemented as follows.

In a first aspect, an embodiment of the present disclosure provides a decoding method applied to a decoder. The method includes following operations.

A bitstream is decoded to determine a value of first syntax identification information.

When the first syntax identification information indicates that a weighted chroma fusion mode is used for a current block, the bitstream is decoded to determine a value of second syntax identification information.

When the second syntax identification information indicates that a chroma fusion merge mode is used for the current block, the bitstream is decoded to determine an index identification value of the current block.

A parameter candidate list of the current block is constructed, and a model parameter of the current block is determined according to the parameter candidate list and the index identification value. The model parameter is used to determine a first prediction value of the current block based on a cross-component prediction mode.

In a second aspect, an embodiment of the present disclosure provides an encoding method applied to an encoder. The method includes following operations.

A value of first syntax identification information is determined.

When the first syntax identification information indicates that a weighted chroma fusion mode is used for a current block, a value of second syntax identification information is determined.

When the second syntax identification information indicates that a chroma fusion merge mode is used for the current block, a parameter candidate list of the current block is constructed.

A model parameter of the current block is determined according to the parameter candidate list. The model parameter is used to determine a first prediction value of the current block based on a cross-component prediction mode.

In a third aspect, an embodiment of the present disclosure provides a bitstream. The bitstream is generated by performing bit encoding according to information to be encoded, and the information to be encoded includes at least one of: an index identification value of a current block, a value of first syntax identification information, a value of second syntax identification information, a value of third syntax identification information, a value of fourth syntax identification information, a value of fifth syntax identification information, a value of sixth syntax identification information; or a value of seventh syntax identification information.

Herein, the first syntax identification information is configured to indicate whether a weighted chroma fusion mode is used for a current block. The second syntax identification information is configured to indicate whether a chroma fusion merge mode is used for the current block. The third syntax identification information is configured to indicate whether a chroma fusion mode is used for the current block. The fourth syntax identification information is configured to indicate whether a linear model chroma fusion mode is used for the current block. The fifth syntax identification information is configured to indicate that a single linear model chroma fusion mode or a bilinear model chroma fusion mode is used for the current block. The sixth syntax identification information is configured to indicate whether a non-cross-component prediction mode is used for the current block. The seventh syntax identification information is configured to indicate whether a cross-component prediction mode is used for the current block.

In a fourth aspect, an embodiment of the present disclosure provides an encoder, which includes a first determination unit.

The first determination unit is configured to: determine a value of first syntax identification information; and when the first syntax identification information indicates that a weighted chroma fusion mode is used for a current block, determine a value of second syntax identification information.

The first determination unit is further configured to: when the second syntax identification information indicates that a chroma fusion merge mode is used for the current block, construct a parameter candidate list of the current block; and determine a model parameter of the current block according to the parameter candidate list. The model parameter is used to determine a first prediction value of the current block based on a cross-component prediction mode.

In a fifth aspect, an embodiment of the present disclosure provides an encoder, which includes a first memory and a first processor.

The first memory is configured to store a computer program executable on the first processor.

The first processor is configured to perform the method of the second aspect when executing the computer program.

In a sixth aspect, an embodiment of the present disclosure provides a decoder, which includes a decoding unit and a second determination unit.

The decoding unit is configured to decode a bitstream to determine a value of first syntax identification information; and when the first syntax identification information indicates that a weighted chroma fusion mode is used for a current block, decode the bitstream to determine a value of second syntax identification information.

The decoding unit is further configured to decode the bitstream to determine an index identification value of the current block when the second syntax identification information indicates that a chroma fusion merge mode is used for the current block.

The second determination unit is further configured to: construct a parameter candidate list of the current block, and determine a model parameter of the current block according to the parameter candidate list and the index identification value. The model parameter is used to determine a first prediction value of the current block based on a cross-component prediction mode.

In a seventh aspect, an embodiment of the present disclosure provides a decoder, which includes a second memory and a second processor.

The second memory is configured to store a computer program executable on the second processor.

The second processor is configured to perform the method of the first aspect when executing the computer program.

In an eighth aspect, an embodiment of the present disclosure provides a computer-readable storage medium having stored thereon a computer program which, when executed, implements the method of the first aspect or the method of the second aspect.

The embodiments of the present disclosure provide an encoding and decoding method, a bitstream, an encoder, a decoder, and a storage medium. At the encoding side, the value of the first syntax identification information is determined; when the first syntax identification information indicates that the weighted chroma fusion mode is used for the current block, the value of the second syntax identification information is determined; when the second syntax identification information indicates that the chroma fusion merge mode is used for the current block, the parameter candidate list of the current block is constructed; and the model parameter of the current block is determined according to the parameter candidate list. At the decoding side, the bitstream is decoded to determine the value of the first syntax identification information; when the first syntax identification information indicates that the weighted chroma fusion mode is used for the current block, the bitstream is decoded to determine the value of the second syntax identification information; when the second syntax identification information indicates that the chroma fusion merge mode is used for the current block, the bitstream is decoded to determine the index identification value of the current block; the parameter candidate list of the current block is constructed, and the model parameter of the current block is determined according to the parameter candidate list and the index identification value. The model parameter is used to determine the first prediction value of the current block based on the cross-component prediction mode. In this way, when the weighted chroma fusion mode is used for the current block, in a case that it is further determined that the chroma fusion merge mode is used for the current block, the parameter candidate list may be constructed, and then the model parameter of the current block may be acquired from the parameter candidate list according to the index identification value. The model parameter may be used to determine the first prediction value of the current block in the cross-component prediction mode. That is to say, for the cross-component prediction mode in the chroma fusion mode, by optimizing the determination of the model parameter in the cross-component prediction mode and providing multiple choices for the cross-component prediction, the prediction accuracy of the chroma fusion mode can be improved, thereby improving the encoding and decoding efficiency.

BRIEF DESCRIPTION OF THE DRAWINGS

FIG. 1 is a schematic diagram of a current block, neighbouring reconstructed chroma samples and neighbouring reconstructed luma samples.

FIG. 2A is a schematic diagram of a Cross-Component Linear Model (CCLM) mode-based linear model.

FIG. 2B is a schematic diagram of a CCLM-SLOPE mode-based linear model.

FIG. 3 is a schematic diagram of a Multi-Model Linear Model (MMLM) mode-based multi-model.

FIG. 4 is a schematic diagram of candidate positions of neighbouring blocks in a spatial domain.

FIG. 5 is a schematic diagram of candidate positions of non-neighbouring blocks in a spatial domain.

FIG. 6 is a schematic block diagram of a composition of an encoder according to an embodiment of the present disclosure.

FIG. 7 is a schematic block diagram of a composition of a decoder according to an embodiment of the present disclosure.

FIG. 8 is a schematic diagram of a network architecture of an encoding and decoding system according to an embodiment of the present disclosure.

FIG. 9 is a first flowchart of a decoding method according to an embodiment of the present disclosure.

FIG. 10 is a second flowchart of a decoding method according to an embodiment of the present disclosure.

FIG. 11 is a first flowchart of an encoding method according to an embodiment of the present disclosure.

FIG. 12 is a second flowchart of an encoding method according to an embodiment of the present disclosure.

FIG. 13 is a schematic diagram of a composition structure of an encoder according to an embodiment of the present disclosure.

FIG. 14 is a schematic diagram of a specific hardware structure of an encoder according to an embodiment of the present disclosure.

FIG. 15 is a schematic diagram of a composition structure of a decoder according to an embodiment of the present disclosure.

FIG. 16 is a schematic diagram of a specific hardware structure of a decoder according to an embodiment of the present disclosure.

FIG. 17 is a schematic diagram of a composition structure of an encoding and decoding system according to an embodiment of the present disclosure.

DETAILED DESCRIPTION

In order to enable a more detailed understanding of the features and technical contents of the embodiments of the present disclosure, implementations of the embodiments of the present disclosure will be described in detail below in conjunction with the accompanying drawings. The accompanying drawings are provided solely for purposes of reference and illustration and are not intended to limit the embodiments of the present disclosure.

Unless otherwise defined, all technical and scientific terms used herein have the same meaning as commonly understood by those skilled in the technical field of the present disclosure. The terms used herein is only for the purpose of describing the present disclosure, and is not intended to limit the present disclosure.

In the following description, reference is made to "some embodiments", which describe a subset of all possible embodiments. However, it can be understood that "some embodiments" may refer to the same subset or different subsets of all possible embodiments, and may be combined with each other without conflict.

It should be noted that the terms "first\ second\ third" involved in embodiments of the present disclosure are used to distinguish similar objects and do not represent a specific order. It can be understood that such used "first\ second\ third" may be interchanged in specific order or sequence where permitted, so that the embodiments of the present disclosure described herein may be implemented in an order other than those illustrated or described herein.

In order to explore the next generation digital video compression technology, based on the latest VTM (H.266/VVC reference software test plateform), a new generation of test model (i.e., the ECM), is developed. At present, the video compression technology is traditional encoding and decoding based on blocks, and may include multiple modules, such as block partitioning, intra prediction, inter prediction, transform, quantization, entropy coding, loop and post-processing filtering, etc. The embodiments of the present disclosure mainly improve the prediction section, thereby improving the encoding performance of the ECM.

Herein, the prediction section may include multiple technologies and may include the luma prediction mode and the chroma prediction mode. Taking the chroma prediction mode as an example, the related syntax of the chroma prediction mode is shown in Table 1.

Table 1

| intra _chroma_pred_mode(){ | |
|---|---|
| if( getUseLMChroma() ){ | |
| **isLMCMode** | ae(v) |
| if( isLMCMode ) { /* LM chroma mode */ | |
| if( getUseCCMerge() ) { | |
| **cclmMrgFlag** | ae(v) |
| } | |
| if( cclmMrgFlag ) | |
| **cclmMrgIdx** | ae(v) |
| else { | |
| **cclmModeIdx** | ae(v) |
| if ( isCCCMEnabled ) { | |
| **cccmFlag** | ae(v) |
| if ( cccmFlag ) { | |
| **cccmNoSubFlag** | ae(v) |
| if ( !cccmNoSubFlag ) | |
| **glCccmFlag** | ae(v) |
| } | |
| } | |
| if ( hasGlmFlag( ) ) { | |
| **glmFlag** | ae(v) |
| if ( glmFlag ) | |
| **glmIdc** | ae(v) |
| } | |
| if (!cccmFlag && hasCclmDeltaFlag() ) | |
| **cclmDeltaFlags** | ae(v) |
| if (cclmDeltaFlags) { | |
| **bothActiveCclmDelta** | ae(v) |
| if ( bothActiveCclmDelta ) { | |
| cclmOffsetsCbFlag = 1 | |
| cclmOffsetsCrFlag = 1 | |
| } else { | |
| **cclmOffsetsCbFlag** | ae(v) |
| if (isMultiModeLM() && !cclmOffsetsCbFlag ) | |
| **cclmOffsetsCrFlag** | ae(v) |
| else | |
| cclmOffsetsCrFlag = !cclmOffsetsCbFlag | |
| } | |
| if (cclmOffsetsCbFlag) | |
| cclmDelta(cclmOffsetsCb) | |

(continued)

| | |
|---|---|
| if (cclmOffsetsCrFlag) | |
| cclmDelta(cclmOffsetsCb) | |
| } | |
| } | |
| } else if ( hasChromaBvFlag() ){ | |
| **DBVFlag** | ae(v) |
| if ( hasChromaFusionFlag() ) | |
| **isChromaFusion** | ae(v) |
| } else if ( isDMEnable) { | |
| **DMFlag** | ae(v) |
| if ( hasChromaFusionFlag() ) | |
| intraChromaFusionMode() | |
| } else if ( getUseDimd() ) { | |
| **DimdChromaFlag** | ae(v) |
| if ( hasChromaFusionFlag() ) | |
| intraChromaFusionMode() | |
| } else { | |
| **chromaModeIdx** | u(2) |
| if ( hasChromaFusionFlag() ) | |
| intraChromaFusionMode() | |
| } | |
| } | |

Herein, for the syntax element cclmModeIdx, the correspondences between the values of the cclmModeIdx and the mode types are shown in Table 2.

Table 2

| Value | Bin | Type |
|---|---|---|
| 0 | 0 | LM |
| 1 | 10 | MMLM |
| 2 | 110 | MDLM_L |
| 3 | 1110 | MDLM_T |
| 4 | 11110 | MMLM_L |
| 5 | 11111 | MMLM_T |

It can be understood that for the CCLM prediction mode, the core idea of the CCLM prediction mode is that the cross-component prediction is performed to reduce the cross-component redundancy, and the prediction values of chroma samples are constructed by mainly using the reconstructed luma samples of the same encoded block. The linear relationship is illustrated in the following formula (1):

$$\mathrm{pred}_C(i, j) = a \cdot \mathrm{rec}_L{'}(i, j) + b \qquad (1)$$

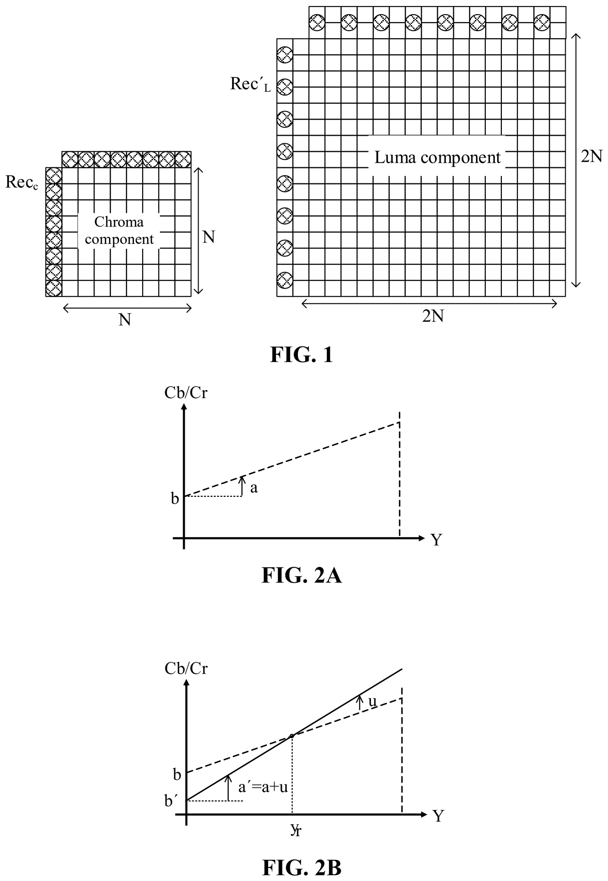

Here, $\mathrm{pred}_C(i,j)$ denotes the chroma prediction sample of the current block; $\mathrm{rec}_L{'}(i,j)$ denotes down-sampled reconstructed luma sample of the current block; a and b are refer to as the linear model parameters (a is the scaling parameter and b is the offset parameter) and may be calculated and derived from the neighbouring chroma samples and neighbouring luma samples. Since the linear model herein may be calculated at both the encoding side and the decoding side, it is not necessary to signal the linear model into the bitstream. Exemplarily, FIG. 1 shows a schematic diagram of the current block, the neighbouring reconstructed chroma samples and the neighbouring reconstructed luma samples in the CCLM mode. As illustrated in FIG. 1, circles filled with grids represent reference samples that are neighbouring the current block and have been reconstructed, which may include the left reference samples and the above reference samples. In addition, N denotes a side length corresponding to a chroma component of the current block, and 2N denotes a side length corresponding to a luma component of the current block.

Herein, in addition to jointly calculating the linear model parameters by using all the above reference samples and the left reference samples, there are two other methods for calculating the model parameters. That is, the CCLM also includes two other modes, which are referred to as a CCLM-T mode and a CCLM-L mode and are described as follows.

In the CCLM-T mode, the linear model parameters are calculated by using only the above reference samples.

In the CCLM-L mode, the linear model parameters are calculated by using only the left reference samples.

In order to further improve the encoding efficiency of the CCLM, many improvements have been made to the CCLM in the ECM, which may include a slope-based CCLM model (denoted as CCLM_SLOPE), the MMLM, a Convolutional Cross-Component Model (CCCM), a Gradient Linear Model (GLM), etc. Some linear models are briefly introduced below.

In the CCLM_SLOPE, the calculated linear model parameters may be adjusted. The adjustment manner is as follows:

$$a' = a + u, \ b' = b - u * yr \qquad (2)$$

Here, the prediction sample is calculated by using the updated linear model parameters a' and b'. With this improvement, the mapping function tilts or rotats around the point with a luma value of yr. Herein, yr is generally an average of the reference luma samples. Exemplarily, FIG. 2A is a schematic diagram of a linear model based on the CCLM mode. FIG. 2B is a schematic diagram of a linear model based on the CCLM-SLOPE mode. The horizontal axis represents reconstructed luma information (denoted as Y), and the vertical axis represents chroma prediction information (denoted as Cb/Cr). The model parameters in FIG. 2A are a and b, the model parameters in FIG. 2B are a' and b' that may be obtained by adjusting the model parameters a and b.

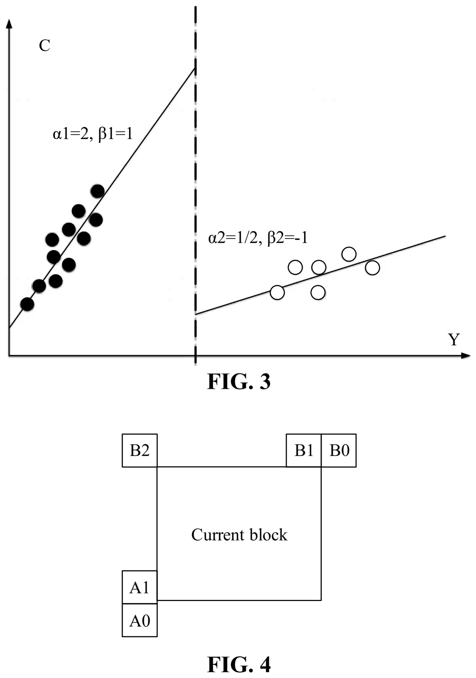

In the CCLM, there is only one linear model between the luma and the chroma of the same encoded block. In the MMLM, multiple models may be provided for the same encoded block. The neighbouring luma samples and neighbouring chroma samples are classified into different categories according to a classification threshold, and the samples in different categories are used to calculate different model parameters. Exemplarily, FIG. 3 is a schematic diagram of multi-model based on the MMLM mode. As illustrated in FIG. 3, the neighbouring reference samples are classified according to the classification threshold, and two linear models may be constructed: a first one of the linear models have the model parameters $\alpha1=2$ and $\beta1=1$, and a second one of the linear models have the model parameters $\alpha2=1/2$ and $\beta2=-1$.

It can be further understood that for a Cross-Component Merge (CCMerge) mode, in the various cross-component linear model prediction modes introduced in the foregoing, all the cross-component model parameters (denoted as ccmParam) are calculated through the neighbouring reconstructed luma samples and neighbouring reconstructed chroma samples. Based on this, the CCMerge technology is proposed herein as a new cross-component prediction mode. In this mode, the ccmParam of the current block may be directly inherited from the reconstructed block, rather than being obtained through calculation. Whether the CCMerge mode is used for the current block is indicated by a flag bit cclmMrgFlag. If the flag bit cclmMrgFlag is true, the CCMerge mode is used for the current block, and a ccmParam list ccmList[NUM_LMC_MERGE_CANDS] may be created for the current block. The existing ccmParam in the list may be filled with the spatial-domain neighbouring candidate blocks and spatial-domain non-neighbouring candidate blocks. By default, the maximum number NUM_LMC_MERGE_CANDS of candidates in this list is 6. When the list is not filled through the above procedure, the list may be filled according to the preset default parameters. The model parameter that is specifically used is indicated by the candidate index cclmMrgIdx.

In some embodiments, the candidate list is filled in following manner.

In a first operation, the spatial-domain neighbouring candidates.

Firstly, the spatial-domain neighbouring blocks are checked, and the positions of the neighbouring blocks may be as illustrated in FIG. 4. The order of the checking is B1->A1->B0->A0->B2.

In a second operation, the spatial-domain non-neighbouring candidates.

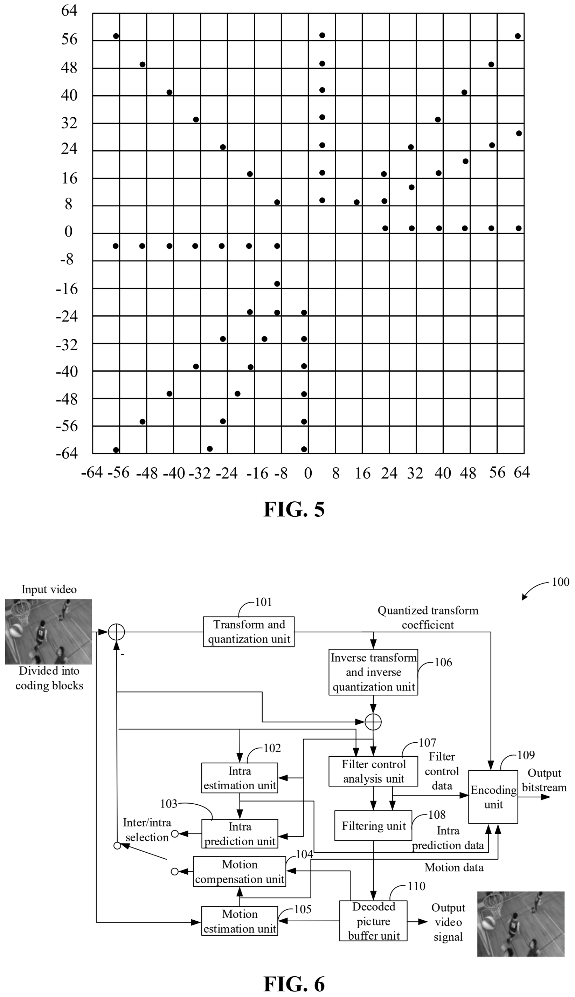

After all the spatial-domain neighboring blocks are checked, the spatial-domain non-neighboring blocks are considered. The position relationship is illustrated in FIG. 5. Each dot represents one non-neighbouring block, and each dot is used to indicate the above-left position of the non-neighbouring block. It should be noted that the grid in FIG. 5 is only a grid illustration of the sample coordinates, and is not a specific block partitioning.

In a third operation, the CCLM candidates with default parameters.

When the list is not filled, after the spatial-domain neighbouring candidates and the spatial-domain non-neighbouring candidates are checked, the CCLM candidates with default scaling parameters are considered. Herein, the default scaling parameters are {0, 1/8, -1/8, 2/8, -2/8, 3/8}.

For the model parameter, the inheritance rules are as follows.

1) When the CCLM candidate is inherited, only the scaling parameter is inherited, and the offset parameter is recalculated.

2) When the MMLM candidate is inherited, the scaling parameter and the classification threshold will be inherited; and the offset parameter is recalculated. However, when no neighbouring reconstructed sample is available in the category, the offset parameter may also be directly inherited.

3) When the CCCM candidate is inherited, all convolution parameters and the classification threshold are inherited.

4) When the GLM candidate is inherited, in a case that the GLM is a three-parameter mode, all the gradient index and model parameters are inherited; otherwise, in a case that the GLM is a two-parameter mode, only the scaling parameter is inherited, and the offset parameter is required to be recalculated.

5) When the chroma fusion mode is inherited, the MMLM parameter derived by the cross-component prediction section is inherited as the candidate.

6) When the CCMerge candidate is inherited, the inheritance manner depends on the candidate mode that is inherited.

It is can be further understood that for the chroma fusion mode, the chroma prediction mode may generally be classified into two types: one is the cross-component prediction mode and the other is the non-cross-component prediction mode. The non-cross-component prediction mode generally includes a Planar mode, a Direct Current (DC) mode, and a Decoder side Intra Mode Derivation (DIMD) mode, etc. When the non-cross-component prediction mode is used for the current block, it is necessary to further parse a flag bit of the chroma fusion mode. The related syntax of the chroma fusion mode is shown in Table 3.

Table 3

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCclm | |

The flag bit of the chroma fusion mode is isChromaFusion. The specific values of the isChromaFusion correspond to different fusion modes, which is shown in Table 4.

Table 4

| Value | Name |
|---|---|
| 0 | Chroma fusion mode is not used (Disable) |
| 1 | Weighted chroma fusion mode (preset weights) |
| 2 | Single linear model chroma fusion mode (single linear model) |
| 3 | Multiple linear model chroma fusion mode (multiple linear model) |

Specifically, several cases of the values of the isChromaFusion may be described in detail below.

When the value of the chromaFusionFlag is 0, the value of the flag bit isChromaFusion is 0, which represents that the chroma fusion mode is not used.

When the value of the chromaFusionFlag is 1 and the value of the chromaFusionType is 0, the value of the flag bit isChromaFusion is 1, which represents that the weighted chroma fusion mode is used. The working principle of this mode is that the current non-cross-component prediction mode is combined with a cross-component prediction mode to obtain the final prediction result. The specific prediction procedure of this model is as follows:

$$pred = (w0 * pred0 + w1 * pred1 + (1 \ll (shift - 1))) \gg shift \qquad (3)$$

Here, pred0 denotes a prediction value obtained by the current non-cross-component prediction mode, pred1 denotes a prediction value obtained by the cross-component prediction mode (this mode defaults to be the MMLM), and pred denotes the final prediction result of the current chroma block. The weights w0 and w1 may be determined according to the prediction modes of the neighboring blocks, and w0+w1=4 and shift=2. Exemplarily, when the cross-component prediction mode is used for both the left neighbouring blocks and the above neighbouring blocks, {w0, w1}={1, 3}; when the non-cross-component prediction mode is used for both the left neighbouring blocks and the above neighbouring blocks, {w0, w1}={3, 1}; and in other cases, {w0, w1}={2, 2}. Moreover, in this case, the parameters of the cross-component prediction mode may be inherited.

When the value of the chromaFusionFlag is 1, the value of the chromaFusionType is 1, and the value of the chromaFusionCclm is 0, the value of the flag bit isChromaFusion is 2, which represents that the single linear model chroma fusion mode is used.

When the value of the chromaFusionFlag is 1, the value of the chromaFusionType is 1, and the value of the chromaFusionCclm is 1, the value of the flag bit isChromaFusion is 3, which represents that the multiple linear model chroma fusion mode is used.

Herein, the working principle of the linear model chroma fusion mode is that the current non-cross-component prediction mode is combined with the reconstructed luma sample values to obtain the final prediction result. The specific prediction procedure of this model is as follows:

$$pred_C = a \cdot rec'_L + b \cdot pred'_C + c \cdot midValue \qquad (4)$$

Here, $pred_C$ denotes the final prediction result, $rec'_L$ denotes the reconstructed luma sample value, $pred'_C$ denotes a chroma prediction sample value obtained by the non-cross-component prediction mode; midValue is the default value that may be determined according to the bit depth, generally, when the bit depth is 10, a value of midValue is 512; and a, b and c are model parameters. The value of the flag bit isChromaFusion is 2, which represents the single linear model (i.e., only one set of model parameters exists); the value of the flag bit isChromaFusion is 3, which represents the multiple linear model (i.e., multiple sets of model parameters exist). The reference samples are classified according to the threshold, and each set of model parameters is used for the reference samples in the category corresponding to the set of model parameters.

That is to say, in the chroma fusion mode in the related art, when the flag bit of the fusion mode is 1, the cross-component model parameters of the cross-component prediction mode are obtained through calculation, which yield a single result. Therefore, the advantages of cross-component prediction cannot be leveraged, and the performance of this part still has significant room for improvement.

Based on this, embodiments of the present disclosure provide an encoding and decoding method. Whether at the encoding side or the decoding side, when the weighted chroma fusion mode is used for the current block, in a case that it is further determined that the chroma fusion merge mode is used for the current block, the parameter candidate list may be constructed, and then the model parameter of the current block may be acquired from the parameter candidate list according to the index identification value. The model parameter may be configured to determine the first prediction value of the current block in the cross-component prediction mode. That is to say, for the cross-component prediction mode in the chroma fusion mode, the corresponding model parameters may be obtained by means of inheritance, rather than being obtained through calculation, and the manner of inheritance herein may also provide various choices for the cross-component prediction. In this way, by optimizing the determination of the model parameter of the cross-component prediction mode, the overall prediction accuracy of the chroma fusion mode can be improved, thereby improving the encoding and decoding efficiency and the encoding and decoding performance.

Hereinafter, various embodiments of the present disclosure will be described in detail with reference to the accompanying drawings.

With reference to FIG. 6, a schematic block diagram of a composition of an encoder according to an embodiment of the present disclosure is illustrated. As illustrated in FIG. 6, the video encoder 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110. The filtering unit 108 may implement de-blocking filtering and Sample Adaptive Offset (SAO) filtering, and the encoding unit 109 may implement header information encoding and Context-based Adaptive Binary Arithmatic Coding (CABAC). A video coding block can be obtained by the division of the Coding Tree Unit (CTU) for an input original video signal; and then the residual sample information obtained after intra or inter prediction is transformed by the transform and quantization unit 101, which includes transforming the residual information from a sample domain to a transform domain, and the obtained transform coefficient is quantized to further reduce the bit rate. The intra estimation unit 102 and the intra prediction unit 103 are configured to perform intra prediction on the video coding block. Specifically, the intra estimation unit 102 and the intra prediction unit 103 are configured to determine an intra prediction mode for encoding the video coding block. The motion compensation unit 104 and the motion estimation unit 105 are configured to perform inter prediction encoding of the received video coding block relative to one or more blocks of one or more reference pictures to provide temporal prediction information. The motion estimation performed by the motion estimation unit 105 is a process of generating a motion vector. The motion vector may be used to estimate the motion of the video coding block, and then motion compensation is performed by the motion compensation unit 104 based on the motion vector determined by the motion estimation unit 105. After the intra prediction mode is determined, the intra prediction unit 103 is further configured to provide the selected intra prediction data to the encoding unit 109, and the motion estimation unit 105 also transmits the motion vector data determined through calculation to the encoding unit 109. In addition, the inverse transform and inverse quantization unit 106 is configured to reconstruct the video coding block so as to reconstruct a residual block in the sample domain. The blocking effect artifact is removed from the reconstructed residual block by the filter control analysis unit 107 and the filtering unit 108, and then the reconstructed residual block is added into a prediction block in the picture of the decoded picture buffer unit 110 to generate the video coding blocks that have been reconstructed. The encoding unit 109 is configured to encode various encoding parameters and quantized transform coefficients. In the CABAC-based coding algorithm, the context content may be based on neighbouring coding block. The encoding unit may be configured to encode information indicating the determined intra prediction mode and output a bitstream of the video signal. The decoded picture buffer unit 110 is configured to store the video coding block that has been reconstructed for prediction reference. As the video picture coding proceeds, new reconstructed video coding blocks are continuously generated, and these reconstructed video coding blocks are stored in the decoded picture buffer unit 110.

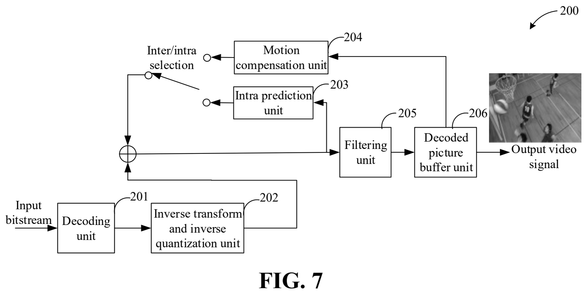

With reference to FIG. 7, a schematic block diagram of a composition of a decoder according to an embodiment of the present disclosure is illustrated. As illustrated in FIG. 7, the decoder 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 may implement the decoding of the header information and the decoding of the CABAC, and the filtering unit 205 may implement the de-blocking filtering and the SAO filtering. After the input video signal is subjected to the encoding processing illustrated in FIG. 6, a bitstream of the video signal is output. The bitstream is input into the decoder 200 and first passed through the decoding unit 201 to obtain the decoded transform coefficient. The transform coefficient is processed by the inverse transform and inverse quantization unit 202 to generate the residual block in the sample domain. The intra prediction unit 203 is configured to generate prediction data of a current video coding block based on the determined intra prediction mode and data from a previously decoded block of a current frame or picture. The motion compensation unit 204 is configured to determine the prediction information for the video coding block by parsing the motion vector and other associated syntax elements, and uses the prediction information to generate a prediction block of the video coding block that is being decoded. A residual block from the inverse transform and inverse quantization unit 202 and the corresponding prediction block generated by the intra prediction unit 203 or the motion compensation unit 204 are summed to form a decoded video block. The decoded video signal is processed by the filtering unit 205 to remove the blocking effect artifact, such that the video quality can be improved. Then the decoded video block is stored in the decoded picture buffer unit 206, and the decoded picture buffer unit 206 stores a reference picture for subsequent intra prediction or motion compensation, and is also used for the output of the video signal, that is, the recovered original video signal is obtained.

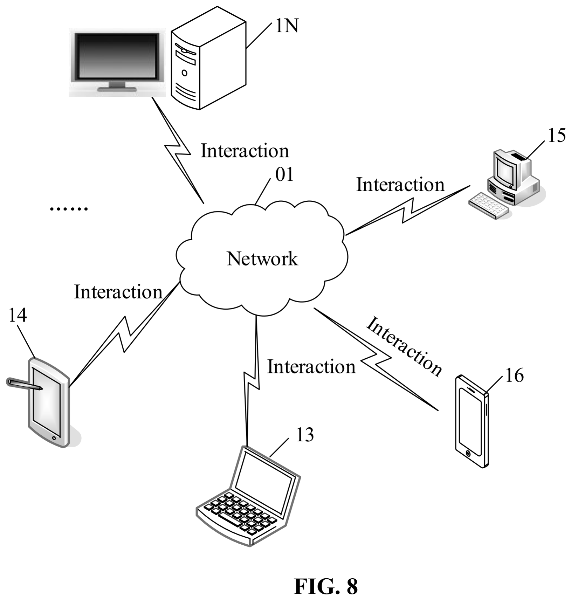

Furthermore, the embodiment of the present application further provides a network architecture of an encoding and decoding system including an encoder and a decoder is applied. FIG. 8 is a schematic diagram of a network architecture of an encoding and decoding system according to an embodiment of the present disclosure. As illustrated in FIG. 8, the network architecture includes one or more electronic devices (electronic device 13 to electronic device 1N) and a communication network 01. The electronic device 13 to electronic device 1N may perform the video interaction with each other through the communication network 01. In the procedure of implementation, the electronic device may be various types of devices with the video encoding and decoding functions. For example, the electronic device may include a smartphone, a tablet computer, a personal computer, a personal digital assistant, a navigator, a digital phone, a video phone, a television, a sensing device, a server, and the like, which is not specifically limited in the embodiments of the present disclosure. Herein, the decoder or the encoder described in the embodiments of the present disclosure may be any of the aforementioned electronic devices.

It should be noted that the method in the embodiment of the present disclosure is mainly applied to the prediction section illustrated in FIG. 6 and the prediction section illustrated in FIG. 7. That is to say, the embodiment of the present disclosure may be applied to both the encoder and the decoder, or may be simultaneously applied to the encoder and the decoder, which is not specifically limited in the embodiment of the present disclosure. In addition, the prediction section herein may include an intra prediction section and an inter prediction section.

It should be further noted that, at the encoding side, the "current block" specifically refers to a coding block on which the chroma prediction is currently to be performed. At the decoding side, the "current block" specifically refers to a decoding block on which the chroma prediction is currently to be performed. Herein, the current block may be a Coding Unit (CU), a Coding Tree Unit (CTU), or even a Prediction Unit (PU) or a Transform Unit (TU), which is not specifically limited herein.

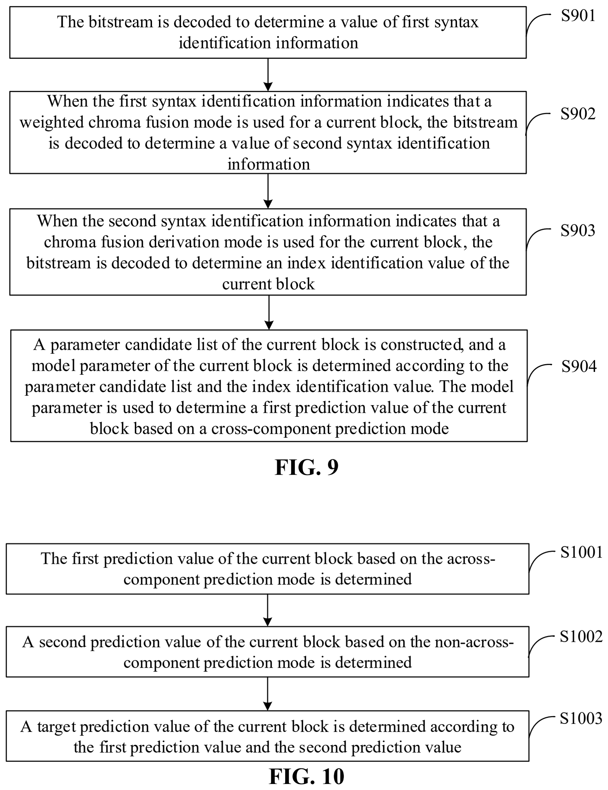

In an embodiment of the present disclosure, with reference to FIG. 9, a flowchart of a decoding method according to an embodiment of the present disclosure is illustrated. As illustrated in FIG. 9, the method may include operation S901 to operation S904.

In operation S901, the bitstream is decoded to determine a value of first syntax identification information.

It should be noted that the decoding method according to the embodiment of the present disclosure is applied to the decoder. In addition, the decoding method may specifically refer to a chroma prediction method. In the chroma prediction mode, the decoding method mainly aimed at the technical improvement of the chroma fusion mode, more specifically, the merge mode may be provided for the cross-component prediction section in the chroma fusion mode, thereby improving the encoding performance of the ECM.

It should be further noted that in the embodiment of the present disclosure, the first syntax identification information is configured to indicate whether the weighted chroma fusion mode is used for the current block, and is denoted by isChromaFusion. In addition, when the first syntax identification information has different values, the cases of the indicated modes are different accordingly.

In some embodiments, the method may further include following operations.

When the value of the first syntax identification information is a first value, it is determined that the first syntax identification information indicates that the chroma fusion mode is not used for the current block.

When the value of the first syntax identification information is a second value, it is determined that the first syntax identification information indicates that the weighted chroma fusion mode is used for the current block.

When the value of the first syntax identification information is a third value, it is determined that the first syntax identification information indicates that a single linear model chroma fusion mode is used for the current block.

When the value of the first syntax identification information is a fourth value, it is determined that the first syntax identification information indicates that a multiple linear model chroma fusion mode is used for the current block.

In the embodiment of the present disclosure, the first value, the second value, the third value, and the fourth value are different from each other. Herein, the first value, the second value, the third value, and the fourth value may be in the form of parameters or numerics. Specifically, the first syntax identification information herein may be a parameter written in a profile, or may be a value of a flag, which is not specifically limited herein. Exemplarily, in a specific implementation, the first value may be 0, the second value may be 1, the third value may be 2, and the fourth value may be 3.

That is to say, in the embodiments of the present disclosure, when the value of the first syntax identification information is 0, it may be determined that the chroma fusion mode is not used for the current block; when the value of the first syntax identification information is 1, it may be determined that the weighted chroma fusion mode is used for the current block; and when the value of the first syntax identification information is 2 or 3, it may be determined that the linear model chroma fusion mode is used for the current block. Herein, when the value of the first syntax identification information is 2, it may be determined that the single linear model chroma fusion mode is used for the current block. When the value of the first syntax identification information is 3, it may be determined that the multiple linear model chroma fusion mode is used for the current block.

In operation S902, when the first syntax identification information indicates that a weighted chroma fusion mode is used for a current block, the bitstream is decoded to determine a value of the second syntax identification information.

In operation S903, when the second syntax identification information indicates that a chroma fusion merge mode is used for the current block, the bitstream is decoded to determine an index identification value of the current block.

It should be noted that in the embodiment of the present disclosure, when the first syntax identification information is configured to indicate that the weighted chroma fusion mode is used for the current block, then decoding is required to obtain the value of the second syntax identification information, to further determine whether the chroma fusion merge mode is used for the current block.

In some embodiments, the method may further include following operations.

When the value of the second syntax identification information is a first value, it is determined that the second syntax identification information indicates that the chroma fusion merge mode is not used for the current block.

When the value of the second syntax identification information is a second value, it is determined that the second syntax identification information indicates that the chroma fusion merge mode is used for the current block.

In the embodiment of the present disclosure, the first value is different from the second value. Herein, the first value and the second value may be in the form of parameters or numerics. Specifically, the second syntax identification information herein may be a parameter written in a profile, or may be a value of a flag, which is not specifically limited herein.

In the embodiment of the present disclosure, the second syntax identification information may be denoted by chromaFusionMrgFlag. Herein, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein. Exemplarily, in a specific implementation, the first value may be 0 and the second value may be 1.

That is to say, in the embodiment of the present disclosure, taking the second syntax identification information being a flag as an example, when the value of the decoded chromaFusionMrgFlag is 0, it may be determined that the chroma fusion merge mode is not used for the current block; and if the value of the decoded chromaFusionMrgFlag is 1, it may be determined that the chroma fusion merge mode is used for the current block.

Furthermore, in some embodiments, the operation that the bitstream is decoded to determine the value of the second syntax identification information may include the following operation. The bitstream is decoded based on a context manner to determine the value of the second syntax identification information.

That is to say, in the embodiment of the present disclosure, the value of the second syntax identification information chromaFusionMrgFlag may be determined in the context decoding manner.

It should be further noted that in the embodiment of the present disclosure, when the second syntax identification information indicates that the chroma fusion merge mode is used for the current block, the decoding is required to obtain the index identification value of the current block. The index identification value is configured to indicate an index number of the set of candidate model parameters referred to by the current block in the parameter candidate list (i.e., the position in the parameter candidate list), so as to further determine the corresponding model parameter subsequently.

Furthermore, in some embodiments, the operation that the bitstream is decoded to determine the index identification value of the current block may include the following operation. The bitstream is decoded based on a truncated binary code manner to determine the index identification value of the current block.

That is to say, in the embodiment of the present disclosure, the index identification value may be denoted by chromaFusionMrgIdx. Herein, the index identification value chromaFusionMrgIdx may be decoded through the truncated binary code manner and may be shared by two chroma channels Cb/Cr. The correspondence between the value of the chromaFusionMrgIdx and the binary code (binary data) is shown in Table 5.

Table 5

| Value | Bin |
|-------|-------|
| 0 | 0 |
| 1 | 10 |
| 2 | 110 |
| 3 | 1110 |
| 4 | 11110 |
| 5 | 11111 |

It should be further noted that in the embodiments of the present disclosure, the context decoding is performed on each bin in the index identification value chromaFusionMrgIdx by using separate context information, so as to determine the index identification value of the current block.

In operation S904, a parameter candidate list of the current block is constructed, and a model parameter of the current block is determined according to the parameter candidate list and the index identification value. The model parameter is used to determine a first prediction value of the current block based on a cross-component prediction mode.

It should be further noted that in the embodiments of the present disclosure, when the second syntax identification information indicates that the chroma fusion merge mode is used for the current block, the decoding is required to obtain the index identification value of the current block. Then, the model parameter of the current block is determined according to the constructed parameter candidate list and the index identification value.

It should be further noted that in the embodiment of the present disclosure, when the second syntax identification information indicates that the chroma fusion merge mode is not used for the current block, in some embodiments, the method may further include the following operation. When the second syntax identification information indicates that the chroma fusion merge mode is not used for the current block, the model parameter of the current block is determined according to a reference sample of the current block. The model parameter is used to determine the first prediction value of the current block based on the cross-component prediction mode.

That is to say, in the embodiments of the present disclosure, if the value of the second syntax identification information chromaFusionMrgFlag is 0 (i.e., the chroma fusion merge mode is not used for the current block), it is no longer necessary to perform the decoding to obtain the index identification value of the current block. In this case, the model parameter of the current block may be calculated according to the existing technical scheme, and the calculated model parameter is used to generate the chroma prediction value based on the cross-component prediction mode.

In some embodiments, the method may further include the following operation. The reference sample of the current block is determined according to a neighbouring region of the current block. The neighbouring region of the current block includes at least one of: a left neighbouring region of the current block or an above neighbouring region of the current block.

It should be noted that in the embodiments of the present disclosure, the reference sample of the current block may be obtained based on the left neighbouring region of the current block (i.e., the CCLM-L mode). In this case, the model parameter is calculated by using only the left neighbouring region of the current block. Alternatively, the reference sample of the current block may be obtained based on the above neighbouring region of the current block (i.e., the CCLM-T mode). In this case, the model parameter is calculated by using only the above neighbouring region of the current block. Alternatively, the reference sample of the current block may be obtained based on the left neighbouring region of the current block and the above neighbouring region of the current block (i.e., the CCLM-LT mode). In this case, the model parameter is calculated by combining the left neighbouring region of the current block and the above neighbouring region of the current block. The manner of determining the reference sample is not specifically limited herein.

It should be further noted that in the embodiment of the present disclosure, the operation that the reference sample of the current block is determined according to the neighbouring region of the current block may include that the reference sample is determined by performing the filtering on the samples in the neighbouring region. In some embodiments, the operation that the filtering is performed on the samples in the neighbouring region may include that the filtering is performed according to the positions of the samples or the intensity of the color component, thereby determining the reference sample of the current block according to the filtered samples.

Specifically, in the embodiment of the present disclosure, the first reference sample set is composed according to the samples in the neighbouring region of the current block; and then, the filtering is performed on the first reference sample set to determine the reference sample. Herein, the number of reference samples may be N, and N is an integer greater than 0. In other words, N reference samples may be selected from the samples in the neighbouring region. Herein, the value of N may generally be 4, which is not specifically limited.

It should be further noted that in the embodiments of the present disclosure, among the samples in the neighbouring region of the current block, some unimportant samples (for example, the correlation of these samples is poor) or some abnormal samples may exist. In order to ensure the accuracy of prediction, it is necessary to eliminate these samples to obtain effective reference samples.

In some embodiments, the operation that the model parameter of the current block is determined according to reference sample of the current block may include following operations.

A reconstructed luma value and a reconstructed chroma value of the reference sample are determined.

Model parameter calculation is performed according to the reconstructed luma value and the reconstructed chroma value to obtain the model parameter of the current block.

Exemplarily, when the chroma fusion merge mode is not used for the current block, for the derivation of the model parameter, a derivation method for constructing the model parameter based on the regression of the least square method is provided herein. Specifically, the model parameter may be obtained by minimizing the regression error of the reconstructed luma values and the reconstructed chroma values of the reference samples around the current block, which may be a and b as illustrated in the following equations:

$$
\begin{cases}
a = \dfrac{2N \cdot \sum (L(n) \cdot C(n)) - \sum L(n) \cdot \sum C(n)}{2N \cdot \sum (L(n) \cdot L(n)) - \sum L(n) \cdot \sum L(n)} \\[3mm]
b = \dfrac{\sum C(n) - a \cdot \sum L(n)}{2N}
\end{cases}
\tag{5}
$$

Here, $L(n)$ denotes down-sampled reconstructed luma values of reference samples corresponding to the left neighbouring region and the above neighbouring region, $C(n)$ denotes the reconstructed chroma values of the reference samples corresponding to the left neighbouring region and the above neighbouring region, and N denotes the number of reference samples.

It can be understood that in the embodiments of the present disclosure, the operation that the parameter candidate list of the current block is constructed may include the following operations. Neighbouring blocks of the current block are determined. When the cross-component prediction mode is used for at least one block of the neighbouring blocks, a respective model parameter of each of the at least one block is determined to obtain at least one set of first candidate model parameters, and the at least one set of first candidate model parameters is added into the parameter candidate list.

It can be understood that in the embodiments of the present disclosure, the neighbouring blocks may include: a block neighbouring the current block in a spatial domain and/or a block neighbouring the current block in a temporal domain. That is to say, the neighbouring blocks herein may be the spatially neighbouring blocks, or may be the temporally neighbouring blocks. Herein, the spatially neighbouring blocks and the current block are located in the same frame, and the temporally neighbouring blocks and the current block are located in different frames. Exemplarily, in the case of the inter prediction, the neighbouring blocks may refer to the time-domain neighbouring blocks located on the reference frame.

It should be further noted that taking the spatial-domain adjacency as an example, the positions of blocks neighbouring the current block may be as illustrated in FIG. 4, and the checking order may be B1->A1->B0->A0->B2. Then, the at least one set of first candidate model parameters is determined in this order.

Furthermore, after the at least one set of first candidate model parameters is added into the parameter candidate list, when the parameter candidate list is in an unfilled state, in some implementations, the operation that the parameter candidate list of the current block is constructed may further include the following operations. Non-neighbouring blocks of the current block are determined. When the cross-component prediction mode is used for at least one block of the non-neighbouring blocks, a respective model parameter of each of the at least one block is determined to obtain at least one set of second candidate model parameters. The at least one set of second candidate model parameters is continued to be added into the parameter candidate list.

It should be further noted that in the embodiment of the present disclosure, the number of candidates in the parameter candidate list is denoted by NUM_LMC_MERGE_CANDS. By default, the value of NUM_LMC_MERGE_CANDS is set to be 6. The number of the first candidate model parameters is less than 6, which represents that the parameter candidate list is in the unfilled state. In this case, it is necessary to determine at least one set of second candidate model parameters according to the non-neighbouring blocks of the current block, and then continue to add the at least one set of second candidate model parameters into the parameter candidate list. Exemplarily, the positions of the spatial-domain non-neighbouring blocks of the current block may be as illustrated in FIG. 5.

Furthermore, after the at least one set of second candidate model parameters is added into the parameter candidate list, when the parameter candidate list is in the unfilled state, in some embodiments, the operation that the parameter candidate list of the current block is constructed may further include the following operations. At least one set of third candidate model parameters is determined according to preset parameter information, and the at least one set of third candidate model parameters is continued to be added into the parameter candidate list.

It should be noted that in the embodiment of the present disclosure, the preset parameter information may at least include a preset value of a first model parameter, and the preset value of the first model parameter is at least one of 0, 1/8, -1/8, 2/8, -2/8, or 3/8.

It should be further noted that in the embodiment of the present disclosure, the model parameter of the current block may include the first model parameter and the second model parameter. The first model parameter may be configured to indicate a scaling parameter when the cross-component prediction mode is used for the current block, and the second model parameter may be configured to indicate an offset parameter when the cross-component prediction mode is used for the current block.

That is to say, after the parameter candidate list is constructed according to the neighbouring blocks and non-neighbouring blocks of the current block, when the constructed parameter candidate list is not in the filled state, the CCLM candidates with default scaling parameters may be considered. Herein, the default scaling parameters may be {0, 1/8, -1/8, 2/8, -2/8, 3/8}. It should be noted that these default scaling parameters may be added into the parameter candidate list in the order of 0, 1/8, -1/8, 2/8,-2/8 and 3/8.

It should be further understood that in the embodiments of the present disclosure, the cross-component prediction mode may include at least one of a CCLM mode, a MMLM mode, a CCCM mode, a GLM mode, a chroma fusion mode, or a CCMerge mode. That is to say, the inheritance mode herein may be any cross-component prediction mode among the CCLM mode, the MMLM mode, the CCCM mode, the GLM mode, the chroma fusion mode, and the CCMerge mode, which is not specifically limited herein.

In some embodiments, the operation that the model parameter of the current block is determined according to the parameter candidate list and the index identification value may include the following operations. A set of candidate model parameters corresponding to the index identification value is determined from the parameter candidate list. An inheritance mode of the current block and corresponding candidate model parameters are determined according to the set of candidate model parameters. The model parameter of the current block is determined according to the inheritance mode and the candidate model parameters of the current block.

Furthermore, in some embodiments, the operation that the model parameter of the current block is determined according to the inheritance mode and the candidate model parameters of the current block may include following operations.

When the inheritance mode of the current block is the CCLM mode, it is determined that the current block inherits a first model parameter among the candidate model parameters.

When the inheritance mode of the current block is the MMLM mode, it is determined that the current block inherits the first model parameter and a classification threshold among the candidate model parameters.

When the inheritance mode of the current block is the CCCM mode, it is determined that the current block inherits a convolution parameter and the classification threshold among the candidate model parameters.

When the inheritance mode of the current block is the GLM mode, in a case that the GLM mode is a three-parameter mode, it is determined that the current block inherits a gradient index value, the first model parameter and a second model parameter among the candidate model parameters; or in a case that the GLM mode is a two-parameter mode, it is determined that the current block inherits the first model parameter among the candidate model parameters.

When the inheritance mode of the current block is the chroma fusion mode, in a case that the chroma fusion mode is the chroma fusion merge mode, a prediction mode inherited by the current block is determined, and the model parameter of the current block is determined according to the prediction mode inherited by the current block and the candidate model parameters; or in a case that the chroma fusion mode is not the chroma fusion merge mode, it is determined that the MMLM mode is used for the current block and it is determined that the current block inherits the first model parameter and the classification threshold among the candidate model parameters.

When the inheritance mode of the current block is the CCMerge mode, the prediction mode inherited by the current block is determined, and the model parameter of the current block is determined according to the prediction mode inherited by the current block and the candidate model parameters.

Specifically, in the embodiments of the present disclosure, a source of the cross-component model parameters is added herein, which may provide various choices for the cross-component prediction mode. Herein, the inheritance rule may be illustrated as follows.

1) When the CCLM mode is inherited, only the scaling parameter is inherited, and the offset parameter is recalculated.

2) When the MMLM mode is inherited, the scaling parameter and the classification threshold will be inherited, and the offset parameter is recalculated. However, when no neighbouring reconstructed sample is available in the category, the offset parameter is also directly inherited.

3) When the CCCM mode is inherited, all convolution parameters and the classification threshold are inherited.

4) When the GLM mode is inherited, in the case that the GLM is a three-parameter mode, all the gradient indexes and model parameters are inherited. Otherwise, in the case that the GLM is a two-parameter mode, only the scaling parameter is inherited, and it is necessary to recalculate the offset parameter.

5) When the chroma fusion mode is inherited,

in a case that the chroma fusion mode is not the chroma fusion merge mode, the MMLM parameter derived by the cross-component prediction section is inherited as the candidate; and
in a case that the chroma fusion mode is the chroma fusion merge mode, the inheritance manner depends on the candidate mode that is inherited.

6) When the CCMerge mode is inherited, the inheritance manner depends on the candidate mode that is inherited.

It should be further understood that in the embodiments of the present disclosure, an independent set of rules may be used for the size of the parameter candidate list and the construction procedure of the parameter candidate list, instead of sharing the rules of the cross-component merge mode, which is not specifically limited herein. In this way, after the model parameter of the current block is determined according to the aforementioned inheritance rule, the target prediction value of the current block may be further determined.

In the embodiments of the present disclosure, when the value of the first syntax identification information isChromaFusion is 1 (i.e., the first syntax identification information indicates that the weighted chroma fusion mode is used for the current block), with reference to FIG. 10, the operation that the target prediction value of the current block is determined may include operation S1001 to operation S1003.

In operation S1001, the first prediction value of the current block based on the cross-component prediction mode is determined.

It should be noted that in the embodiments of the present disclosure, the first prediction value may be obtained by performing the chroma prediction using the cross-component prediction mode according to the determined model parameter. Exemplarily, the cross-component prediction mode herein may be the CCLM mode, the MMLM mode, the CCCM mode, or the like, which is not specifically limited herein.

In operation S1002, a second prediction value of the current block based on the non-cross-component prediction mode is determined.

It should be further noted that in the embodiments of the present disclosure, the second prediction value may be obtained by performing the chroma prediction using the non-cross-component prediction mode. Exemplarily, the non-cross-component prediction mode herein may be the Planar mode, the DC mode, the DIMD mode, or the like, which is not specifically limited herein.

In operation S1003, a target prediction value of the current block is determined according to the first prediction value and the second prediction value.

It should be noted that in the embodiments of the present disclosure, operation S1001 and operation S1002 may be performed in parallel or in series. In addition, when operation S1001 and operation S1002 are performed in series, operation S1001 may be performed first, and then operation S1002 may be performed. Alternatively, operation S1002 may be performed first, and then operation S1001 may be performed, which is not specifically limited herein.

It should be further noted that in the embodiment of the present disclosure, when the weighted chroma fusion mode is used for the current block, the final target prediction value may be obtained by combining the first prediction value obtained by the cross-component prediction mode and the second prediction value obtained by the non-cross-component prediction mode. Specifically, in some embodiments, the operation that the target prediction value of the current block is determined according to the first prediction value and the second prediction value may include following operations.

A first shift factor is determined.

An offset value of the current block is determined according to the first shift factor.

The target prediction value of the current block is determined according to the offset value, the first prediction value and the second prediction value.

It should be noted that in the embodiment of the present disclosure, the first shift factor may be denoted by shift. Exemplarily, the value of shift is set to be 2. In addition, the offset value of the current block may be set to be 1 « (shift - 1).

In a specific implementation, the operation that the target prediction value of the current block is determined according to the offset value, the first prediction value and the second prediction value may include the following operation. Weighted calculation is performed according to the offset value, the first prediction value and the second prediction value to determine the target prediction value of the current block.

In a more specific implementation, the operation that the target prediction value of the current block is determined according to the offset value, the first prediction value and the second prediction value may include the following operation. A first weighting value and a second weighting value are determined. Weighted calculation is performed according to the first weighting value and the first prediction value, as well as the second weighting value and the second prediction value, to determine a third prediction value. A fourth prediction value is determined according to the offset value and the third prediction value, and shift calculation is performed on the fourth prediction value according to the first shift factor to determine the target prediction value of the current block.

It should be noted that in the embodiments of the present disclosure, the first weighting value may be denoted by w0, and the second weighting value may be denoted by w1. Herein, w0 and w1 may be determined according to the prediction modes of the neighboring blocks; w0+w1=4 and shift=2. Exemplarily, when the cross-component prediction mode is used for both the left neighbouring blocks and the above neighbouring blocks, {w0, w1}={1, 3}. When the non-cross-component prediction mode is used for both the left neighbouring blocks and the above neighbouring blocks, {w0, w1}={3, 1}. In other cases, {w0, w1}={2, 2}.

Exemplarily, pred0 denotes the second prediction value of the current block based on the non-cross-component prediction mode, pred1 denotes the first prediction value of the current block based on the cross-component prediction mode, and pred denotes the final target prediction value of the current block. The specific prediction procedure of this model is as follows:

$$\mathrm{pred} = (\mathrm{w0} * \mathrm{pred0} + \mathrm{w1} * \mathrm{pred1} + (1 \ll (\mathrm{shift} - 1))) \gg \mathrm{shift} \qquad (6)$$

It should be further understood that in the embodiments of the present disclosure, the value of the first syntax identification information may be determined according to the third syntax identification information, the fourth syntax identification information and the fifth syntax identification information. Herein, the third syntax identification information may be denoted by chromaFusionFlag, the fourth syntax identification information may be denoted by chromaFusion-Type, and the fifth syntax identification information may be denoted by chromaFusionCclm.

In some embodiments, the operation that the bitstream is decoded to determine the value of the first syntax identification information may include following operations.

The bitstream is decoded to determine a value of third syntax identification information.

When the third syntax identification information indicates that a chroma fusion mode is used for the current block, the bitstream is decoded to determine a value of fourth syntax identification information.

When the fourth syntax identification information indicates that a linear model chroma fusion mode is not used for the current block, the value of the first syntax identification information is determined according to the value of the third syntax identification information and the value of the fourth syntax identification information.

In a possible embodiment, when the third syntax identification information indicates that the chroma fusion mode is not used for the current block, the method further includes the operation that the value of the first syntax identification information is set to be equal to the value of the third syntax identification information.

In a possible embodiment, when the fourth syntax identification information indicates that the linear model chroma fusion mode is not used for the current block, the method further includes the operation that the value of the first syntax identification information is set to be the sum of the value of the third syntax identification information and the value of the fourth syntax identification information.

In a possible embodiment, when the fourth syntax identification information indicates that the linear model chroma fusion mode is used for the current block, the method further includes the following operations. The bitstream is decoded to determine a value of fifth syntax identification information, and the value of the first syntax identification information is determined according to the value of the third syntax identification information, the value of the fourth syntax identification information and the value of the fifth syntax identification information.

It should be noted that in the embodiments of the present disclosure, reference can be made to Table 3 for the description of specific syntax elements for obtaining the first syntax identification information through. Herein, the value of the first syntax identification information isChromaFusion may be equal to the sum of the third syntax identification information chromaFusionFlag, the fourth syntax identification information chromaFusionType, and the fifth syntax identification information chromaFusionCclm, which is illustrated in the following formula:

$$isChromaFusion = chromaFusionFlag + chromaFusionType + chromaFusionCclm \quad (7)$$

It should be further noted that in the embodiments of the present disclosure, for determining the third syntax identification information, the fourth syntax identification information and the fifth syntax identification information, in a specific implementation, the method may further include following operations.

When the value of the third syntax identification information is a first value, it is determined that the third syntax identification information indicates that the chroma fusion mode is not used for the current block.

When the value of the third syntax identification information is a second value, it is determined that the third syntax identification information indicates that the chroma fusion mode is used for the current block.

In another specific implementation, the method may further include following operations.

When the value of the fourth syntax identification information is a first value, it is determined that the fourth syntax identification information indicates that the linear model chroma fusion mode is not used for the current block.

When the value of the fourth syntax identification information is a second value, it is determined that the fourth syntax identification information indicates that the linear model chroma fusion mode is used for the current block.

In another specific implementation, the method may further include following operations.

When the value of the fifth syntax identification information is a first value, it is determined that the fifth syntax identification information indicates that the single linear model chroma fusion mode is used for the current block.

When the value of the fifth syntax identification information is a second value, it is determined that the fifth syntax identification information indicates that the multiple linear model chroma fusion mode is used for the current block.

In the embodiment of the present disclosure, the first value is different from the second value. Herein, the first value and the second value may be in the form of parameters or numerics. Specifically, the third syntax identification information, the fourth syntax identification information or the fifth syntax identification information herein may be a parameter written in a profile, or may be a value of a flag, which is not specifically limited herein.

In the embodiments of the present disclosure, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein. Exemplarily, in a specific implementation, the first value may be 0 and the second value may be 1.

Exemplarily, when the value of the third syntax identification information chromaFusionFlag is 0, the value of the first syntax identification information isChromaFusion is equal to the value of the third syntax identification information chromaFusionFlag. That is, the value of the first syntax identification information isChromaFusion is 0, which represents that the chroma fusion mode is not used for the current block.

Exemplarily, when the value of the third syntax identification information chromaFusionFlag is 1 and the value of the fourth syntax identification information chromaFusionType is 0, the value of the first syntax identification information isChromaFusion is equal to the sum of the value of the third syntax identification information chromaFusionFlag and the value of the fourth syntax identification information chromaFusionType. That is, the value of the first syntax identification information isChromaFusion is 1, which represents that the weighted chroma fusion mode is used for the current block.

Exemplarily, when the value of the third syntax identification information chromaFusionFlag is 1 and the value of the fourth syntax identification information chromaFusionType is 1, the value of the first syntax identification information isChromaFusion is equal to the sum of the third syntax identification information chromaFusionFlag, the fourth syntax identification information chromaFusionType, and the fifth syntax identification information chromaFusionCclm. When the value of the fifth syntax identification information chromaFusionCclm is 0, the value of the first syntax identification information isChromaFusion is 2, which represents that the single linear model chroma fusion mode is used for the current block. When the value of the fifth syntax identification information chromaFusionCclm is 1, the value of the first syntax identification information isChromaFusion is 3, which represents that the multiple linear model chroma fusion mode is used for the current block.

Furthermore, in some embodiments, the method may further include the following operations. The bitstream is decoded to determine a value of sixth syntax identification information. When the sixth syntax identification information indicates that the non-cross-component prediction mode is used for the current block, the operation of decoding the bitstream to determine the value of the first syntax identification information is continued to be performed.

It should be noted that in the embodiments of the present disclosure, the chroma fusion mode is used as a supplementary scheme in the non-cross-component prediction mode. When the non-cross-component prediction mode is used for the current block, it is necessary to continue to determine whether the chroma fusion mode is used for the current block and whether the chroma fusion merge mode is used for the current block, thereby determining whether the cross-component prediction mode is required to be fused with the non-cross-component prediction mode.

Furthermore, in some embodiments, the method may further include the following operations. The bitstream is decoded to determine a value of seventh syntax identification information When the seventh syntax identification information indicates that the cross-component prediction mode is used for the current block, the operation of decoding the bitstream to determine the value of the first syntax identification information is continued to be performed.

It should be noted that in the embodiments of the present disclosure, the chroma fusion mode is also used as a supplementary scheme in the cross-component prediction mode. When the cross-component prediction mode is used for the current block, it is necessary to continue to determine whether the chroma fusion mode is used for the current block and whether the chroma fusion merge mode is used for the current block, thereby determining whether the cross-component prediction mode is required to be fused with the non-cross-component prediction mode.

Furthermore, for the sixth syntax identification information, the method may further include following operations.

When the value of the sixth syntax identification information is a first value, it is determined that the sixth syntax identification information indicates that the non-cross-component prediction mode is not used for the current block.

When the value of the sixth syntax identification information is a second value, it is determined that the sixth syntax identification information indicates that the non-cross-component prediction mode is used for the current block.

Furthermore, for the seventh syntax identification information, the method may further include following operations.

When the value of the seventh syntax identification information is a first value, it is determined that the seventh syntax identification information indicates that the cross-component prediction mode is not used for the current block.

When the value of the seventh syntax identification information is a second value, it is determined that the seventh syntax identification information indicates that the cross-component prediction mode is used for the current block.

It should be noted that in the embodiments of the present disclosure, the first value is different from the second value. Herein, the first value and the second value may be in the form of parameters or numerics. Specifically, the sixth syntax identification information or the seventh syntax identification information herein may be a parameter written in a profile, or may be a value of a flag, which is not specifically limited herein.

It should be further noted that in the embodiments of the present disclosure, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein.

In a specific implementation, the first value may be 0 and the second value may be 1. That is, when the chroma fusion mode is used as the supplementary scheme in the non-cross-component prediction mode, in the case that the value of the sixth syntax identification information is 1, it is determined that the non-cross-component prediction mode is used for the current block. In this case, the operation of decoding the bitstream to determine the value of the first syntax identification information is continued to be performed. Alternatively, when the chroma fusion mode is used as the supplementary scheme in the cross-component prediction mode, in the case that the value of the seventh syntax identification information is 1, it is determined that the cross-component prediction mode is used for the current block. In this case, the operation of decoding the bitstream to determine the value of the first syntax identification information is continued to be performed.

The embodiments of the present disclosure provide a decoding method. Firstly, the bitstream is decoded to determine the value of the first syntax identification information. When the first syntax identification information indicates that the weighted chroma fusion mode is used for the current block, the bitstream is continued to be decoded to determine the value of the second syntax identification information. When the second syntax identification information indicates that the chroma fusion merge mode is used for the current block, the bitstream is continued to be decoded to determine the index identification value of the current block. The parameter candidate list of the current block is constructed, and a model parameter of the current block is determined according to the parameter candidate list and the index identification value. The model parameter is used to determine the first prediction value of the current block based on the cross-component prediction mode. In this way, when the weighted chroma fusion mode is used for the current block, in the case that it is further determined that the chroma fusion merge mode is used for the current block, the parameter candidate list may be constructed, and then the model parameter of the current block may be obtained from the parameter candidate list according to the index identification value. That is, for the cross-component prediction mode in the chroma fusion mode, by optimizing the determination of the model parameter of the cross-component prediction mode, which specifically includes the operation that the linear prediction section in the chroma fusion mode may derive the model parameter through inheritance instead of calculation, and by providing multiple choices for the linear prediction section, the prediction accuracy of the chroma fusion mode may be improved, thereby improving the encoding and decoding efficiency.

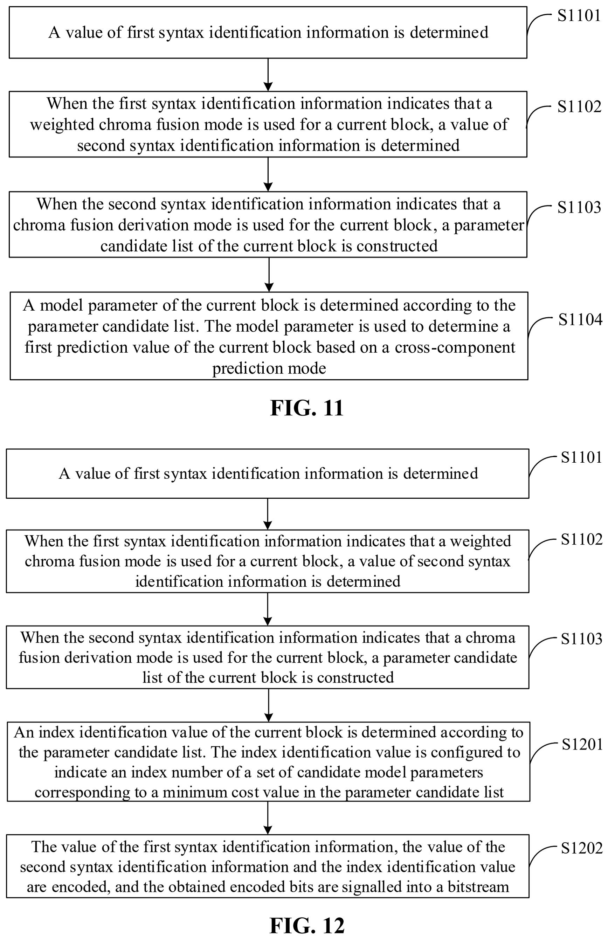

In another embodiment, with reference to FIG. 11, a flowchart of an encoding method according to an embodiment of the present disclosure is illustrated. As illustrated in FIG. 11, the method may include operation S1101 to operation 1104.

In operation S1101, a value of first syntax identification information is determined.

It should be noted that the encoding method according to the embodiments of the present disclosure is applied to the encoder. In addition, the encoding method may specifically refer to a chroma prediction method. In the chroma prediction mode, the encoding method mainly aimed at the technical improvement of the chroma fusion mode. More specifically, the merge mode may be provided for the cross-component prediction section in the chroma fusion mode, thereby improving the encoding performance of the ECM.

It should be further noted that in the embodiments of the present disclosure, the first syntax identification information is used to indicate whether a weighted chroma fusion mode is used for a current block, and is denoted by isChromaFusion. In addition, when the first syntax identification information has different values, the cases of the indicated modes are different accordingly.

In some embodiments, the method may further include following operations.

When the chroma fusion mode is not used for the current block, it is determined that the value of the first syntax identification information is a first value.

When the weighted chroma fusion mode is used for the current block, it is determined that the value of the first syntax identification information is a second value.

When a single linear model chroma fusion mode is used for the current block, it is determined that the value of the first syntax identification information is a third value.

When a multiple linear model chroma fusion mode is used for the current block, it is determined that the value of the first syntax identification information is a fourth value.

In the embodiments of the present disclosure, the first value, the second value, the third value, and the fourth value are different from each other. Herein, the first value, the second value, the third value, and the fourth value may be in the form of parameters or numerics. Specifically, the first syntax identification information herein may be a parameter written in a profile, or may be a value of a flag, which is not specifically limited herein. Exemplarily, in a specific implementation, the first value may be 0, the second value may be 1, the third value may be 2, and the fourth value may be 3.

That is, in the embodiments of the present disclosure, when the chroma fusion mode is not used for the current block, the value of the first syntax identification information is 0. When the weighted chroma fusion mode is used for the current block, the value of the first syntax identification information is 0. When the linear model chroma fusion mode is used for the current block, the value of the first syntax identification information is 2 or 3. Herein, when the signal linear model chroma fusion mode is used for the current block, the value of the first syntax identification information is 2. When the multiple linear model chroma fusion mode is used for the current block, the value of the first syntax identification information is 3.

Furthermore, in some embodiments, the method may further include the operation that the value of the first syntax identification information is encoded, and the obtained encoded bits are signalled into a bitstream.

It should be noted that in the embodiments of the present disclosure, the encoding side signals the value of the first syntax identification information, so that the decoding side can directly determine the value of the first syntax identification information by decoding the bitstream, and then determine whether the weighted chroma fusion mode is used for the current block.

In operation S1102, when the first syntax identification information indicates that a weighted chroma fusion mode is used for the current block, a value of second syntax identification information is determined.

In operation S1103, when the second syntax identification information indicates that the chroma fusion merge mode is used for the current block, a parameter candidate list of the current block is constructed.

It should be noted that in the embodiments of the present disclosure, when the first syntax identification information indicates that the weighted chroma fusion mode is used for the current block, it is necessary to continue to determine whether the chroma fusion merge mode is used for the current block. Then, when the second syntax identification information indicates that the chroma fusion merge mode is used for the current block, the parameter candidate list of the current block may be constructed. Otherwise, when the second syntax identification information indicates that the chroma fusion merge mode is not used for the current block, it is no longer necessary to construct the parameter candidate list of the current block.

Furthermore, in some embodiments, the method may further include following operations.

When the second syntax identification information indicates that the chroma fusion merge mode is not used for the current block, it is determined that the value of the second syntax identification information is a first value.

When the second syntax identification information indicates that the chroma fusion merge mode is used for the current block, it is determined that the value of the second syntax identification information is a second value.

In the embodiments of the present disclosure, the first value is different from the second value. Herein, the first value and the second value may be in the form of parameters or numerics. Specifically, the second syntax identification information herein may be a parameter written in a profile, or may be a value of a flag, which is not specifically limited herein.

In the embodiments of the present disclosure, the second syntax identification information may be denoted by chromaFusionMrgFlag. Herein, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein. Exemplarily, in a specific implementation, the first value may be 0 and the second value may be 1.

That is to say, in the embodiment of the present disclosure, taking the second syntax identification information being a flag as an example, when the chroma fusion merge mode is not used for the current block, it is determined that the value of the chromaFusionMrgFlag is 0. When the chroma fusion merge mode is used for the current block, it is determined that the value of the chromaFusionMrgFlag is 1.

In some embodiments, the method may further include the operation that the value of the second syntax identification information is encoded, and the obtained encoded bits are signalled into the bitstream.

Furthermore, in some embodiments, the method may further include the operation that the value of the second syntax identification information is encoded based on the context, and the obtained encoded bits are signalled.

That is, in the embodiments of the present disclosure, the second syntax identification information chromaFusionMrgFlag may be signalled in the context encoding manner, so that the value of the chromaFusionMrgFlag may be directly determined at the decoding side by decoding the bitstream subsequently, and then it can be determined whether the chroma fusion merge mode is used for the current block.

It should be further noted that in the embodiments of the present disclosure, when the second syntax identification information indicates that the chroma fusion merge mode is used for the current block, it is necessary to construct the parameter candidate list of the current block.

In some embodiments, the operation that the parameter candidate list of the current block is constructed may include the following operations. Neighbouring blocks of the current block are determined. When the cross-component prediction mode is used for at least one block of the neighbouring blocks, a respective model parameter of each of the at least one block is determined to obtain at least one set of first candidate model parameters. The at least one set of first candidate model parameters is added into the parameter candidate list.

It should be understood that in the embodiments of the present disclosure, the neighbouring blocks may include: a block neighbouring the current block in a spatial domain and/or a block neighbouring the current block in a temporal domain. That is, the neighbouring blocks herein may be the spatial-domain neighbouring blocks, or may be the temporal-domain neighbouring blocks. Herein, the spatial-domain neighbouring blocks and the current block are located in the same frame, and the temporal-domain neighbouring blocks and the current block are located in different frames. Exemplarily, in the case of the inter prediction, the neighbouring blocks in this case may refer to the time-domain neighbouring blocks located on the reference frame.

It should be further noted that taking the spatial-domain adjacency as an example, the positions of blocks neighbouring the current block may be as illustrated in FIG. 4. The checking order may be B1->A1->B0->A0->B2. Then, the at least one set of first candidate model parameters is determined in this order.

Furthermore, after the at least one set of first candidate model parameters is added into the parameter candidate list, when the parameter candidate list is in an unfilled state, in some implementations, the operation that the parameter candidate list of the current block is constructed may further include the following operations. Non-neighbouring blocks of the current block are determined. When the cross-component prediction mode is used for at least one block of the non-neighbouring blocks, a respective model parameter of each of the at least one block is determined to obtain at least one set of second candidate model parameters. The at least one set of second candidate model parameters is continued to be added into the parameter candidate list.

It should be further noted that in the embodiments of the present disclosure, the number of candidates in the parameter candidate list is denoted by NUM _LMC_MERGE_CANDS. By default, the value of NUM _LMC_MERGE_CANDS is set to be 6. The number of the first candidate model parameters is less than 6, which represents that the parameter candidate list is in the unfilled state. In this case, it is necessary to determine at least one set of second candidate model parameters according to the non-neighbouring blocks of the current block, and then continue to add the at least one set of second candidate model parameters into the parameter candidate list. Exemplarily, the positions of the spatial-domain non-neighbouring blocks of the current block may be as illustrated in FIG. 5.

Furthermore, after the at least one set of second candidate model parameters is added into the parameter candidate list, when the parameter candidate list is in the unfilled state, in some embodiments, the operation that the parameter candidate list of the current block is constructed may further include the following operations. At least one set of third candidate model parameters is determined according to preset parameter information, and the at least one set of third candidate model parameters are continued to be added into the parameter candidate list.

It should be noted that in the embodiments of the present disclosure, the preset parameter information may at least include a preset value of a first model parameter, and the preset value of the first model parameter is at least one of 0,1/8, -1/8, 2/8, -2/8, or 3/8.

It should be noted that in the embodiments of the present disclosure, the first model parameter may be configured to indicate a scaling parameter when the cross-component prediction mode is used for the current block. That is to say, after the parameter candidate list is constructed according to the neighbouring blocks and non-neighbouring blocks of the current block, when the constructed parameter candidate list is not in the filled state, the CCLM candidates with default scaling parameters may be considered. Herein, the default scaling parameters may be {0, 1/8, -1/8, 2/8, -2/8, 3/8}. It should be noted that these default scaling parameters may be added into the parameter candidate list in the order of 0, 1/8, -1/8, 2/8,-2/8 and 3/8.

In this way, it is possible to complete the construction of the parameter candidate list, and the parameter candidate list includes NUM _LMC_MERGE_CANDS sets of candidate model parameters. NUM _LMC_MERGE_CANDS denotes the number of candidates included in the parameter candidate list.

In operation S1104, a model parameter of the current block is determined according to the parameter candidate list. The model parameter is used to determine a first prediction value of the current block based on a cross-component prediction mode.

It should be noted that in the embodiments of the present disclosure, after the parameter candidate list is constructed, the model parameter of the current block may be determined according to the parameter candidate list. Herein, the model parameter of the current block may include the first model parameter and the second model parameter. The first model parameter may be configured to indicate a scaling parameter when the cross-component prediction mode is used for the current block, and the second model parameter may be configured to indicate an offset parameter when the cross-component prediction mode is used for the current block.

In some embodiments, the operation that the model parameter of the current block is determined according to the parameter candidate list may include following operations.

Cost calculation is performed on at least two sets of candidate model parameters in the parameter candidate list to determine a respective cost value of each of the at least two sets of candidate model parameters.

A minimum cost value is determined from the cost values of the at least two sets of candidate model parameters, and the model parameter of the current block is determined according to a set of candidate model parameters corresponding to the minimum cost value.

It should be further noted that in the embodiments of the present disclosure, the cost calculation is performed on each of the at least two sets of candidate model parameters in the parameter candidate list, respectively. Herein, the cost here may refer to a distortion value, a rate distortion cost value, or another cost value, which is not specifically limited herein.

Exemplarily, taking the rate distortion cost as an example, after the respective cost value of each of the at least two sets of candidate model parameters is determined, the minimum cost value is determined from the cost values, and the model parameter of the current block is further determined according to the set of candidate model parameters corresponding to the minimum cost value.

Furthermore, in some embodiments, with reference to FIG. 12, after the operation S1103, the method may further include operation 1201 to operation 1202.

In operation S1201, an index identification value of the current block is determined according to the parameter candidate list. The index identification value is configured to indicate an index number of the set of candidate model parameters corresponding to a minimum cost value in the parameter candidate list.

In operation S1202, the value of the first syntax identification information, the value of the second syntax identification information and the index identification value are encoded, and the obtained encoded bits are signalled into the bitstream.

It should be noted that in the embodiments of the present disclosure, when the model parameter of the current block is determined according to the set of candidate model parameters corresponding to the minimum cost value, it is necessary to further determine the index identification value of the current block. The index identification value is configured to indicate the index number of the set of candidate model parameters corresponding to the minimum cost value in the parameter candidate list (i.e., the position in the parameter candidate list). The index identification value is encoded, and the obtained encoded bits are signalled into the bitstream.

Furthermore, in some embodiments, for the index identification value of the current block, the method may further include the following operations. The index identification value is encoded based on a truncated binary code manner, and the obtained encoded bits are signalled into the bitstream.

That is, in the embodiments of the present disclosure, the index identification value may be denoted by chromaFusionMrgIdx. Herein, the index identification value chromaFusionMrgIdx may be encoded through the truncated binary code manner and may be shared by two chroma channels Cb/Cr. The correspondence between the index identification value chromaFusionMrgIdx and binary code (binary data) is shown in aforementioned Table 5. In addition, in the encoding procedure, the context encoding is performed on each bin in the index identification value chromaFusionMrgIdx by using separate context information.

In this way, after the index identification value of the current block is determined and signalled at the encoding side, the decoding side may directly determine the index identification value of the current block by decoding the bitstream, and then determine the corresponding model parameter in combination with the constructed parameter candidate list.

It can be understood that in the embodiments of the present disclosure, for the model parameter of the current block, in some embodiments, the operation that the model parameter of the current block is determined according to the set of candidate model parameters corresponding to the minimum cost value may include the following operations. An inheritance mode and corresponding candidate model parameters of the current block are determined according to the set of candidate model parameters corresponding to the minimum cost value, and the model parameter of the current block is determined according to the inheritance mode and the candidate model parameters of the current block.

It should be further noted that in the embodiments of the present disclosure, the cross-component prediction mode may include at least one of a CCLM mode, a MMLM mode, a CCCM mode, a GLM mode, a chroma fusion mode, or a CCMerge mode. That is to say, the inheritance mode herein may be any cross-component prediction mode among the CCLM mode, the MMLM mode, the CCCM mode, the GLM mode, the chroma fusion mode, and the CCMerge mode, which is not specifically limited herein.

Furthermore, in some embodiments, the operation that the model parameter of the current block is determined according to the inheritance mode and the candidate model parameters of the current block may include following operations.

When the inheritance mode of the current block is the CCLM mode, it is determined that the current block inherits a first model parameter among the candidate model parameters.

When the inheritance mode of the current block is the MMLM mode, it is determined that the current block inherits the first model parameter and a classification threshold among the candidate model parameters.

When the inheritance mode of the current block is the CCCM mode, it is determined that the current block inherits a convolution parameter and the classification threshold among the candidate model parameters.

When the inheritance mode of the current block is the GLM mode, in a case that the GLM mode is a three-parameter mode, it is determined that the current block inherits a gradient index value, the first model parameter and a second model parameter among the candidate model parameters; or in a case that the GLM mode is a two-parameter mode, it is determined that the current block inherits the first model parameter among the candidate model parameters.

When the inheritance mode of the current block is the chroma fusion mode, in a case that the chroma fusion mode is the chroma fusion merge mode, a prediction mode inherited by the current block is determine, and the model parameter of the current block is determined according to the prediction mode inherited by the current block and the candidate model parameters; or in a case that the chroma fusion mode is not the chroma fusion merge mode, it is determined that the MMLM mode is used for the current block and it is determined that the current block inherits the first model parameter and the classification threshold among the candidate model parameters.

When the inheritance mode of the current block is the CCMerge mode, the prediction mode inherited by the current block is determined, and the model parameter of the current block is determined according to the prediction mode inherited by the current block and the candidate model parameters.

Specifically, in the embodiments of the present disclosure, a source of the cross-component model parameters is added herein, which may provide various choices for the cross-component prediction mode. Herein, the inheritance rule may be illustrated as follows.

1) When the CCLM mode is inherited, only the scaling parameter is inherited, and the offset parameter is recalculated.

2) When the MMLM mode is inherited, the scaling parameter and the classification threshold will be inherited, and the offset parameter is recalculated. However, when no neighbouring reconstructed sample is available in the category, the offset parameter is also directly inherited.

3) When the CCCM mode is inherited, all convolution parameters and the classification threshold are inherited.

4) When the GLM mode is inherited, in the case that the GLM is a three-parameter mode, all the gradient indexes and model parameters are inherited. Otherwise, in the case that the GLM is a two-parameter mode, only the scaling parameter is inherited, and it is necessary to recalculate the offset parameter.

5) When the chroma fusion mode is inherited,

in a case that the chroma fusion mode is not the chroma fusion merge mode, the MMLM parameter derived by the cross-component prediction section is inherited as the candidate; and
in a case that the chroma fusion mode is the chroma fusion merge mode, the inheritance manner depends on the candidate mode that is inherited.

6) When the CCMerge mode is inherited, the inheritance manner depends on the candidate mode that is inherited.

It should be further noted that, in the embodiments of the present disclosure, an independent set of rules may be used for the size of the parameter candidate list and the construction procedure of the parameter candidate list, instead of sharing the rules of the cross-component merge mode, which is not specifically limited herein. In this way, when the second syntax identification information indicates that the chroma fusion merge mode is used for the current block, the model parameter of the current block may be determined based on the constructed parameter candidate list and the aforementioned inheritance rules.

It should be further understood that in the embodiments of the present disclosure, when the second syntax identification information indicates that the chroma fusion merge mode is not used for the current block, in some embodiments, the method may further include the following operations. When the second syntax identification information indicates that the chroma fusion merge mode is not used for the current block, the model parameter of the current block is determined according to a reference sample of the current block. The model parameter is used to determine the first prediction value of the current block based on the cross-component prediction mode.

That is to say, in the embodiments of the present disclosure, when the value of the second syntax identification information chromaFusionMrgFlag is 0 (i.e., the chroma fusion merge mode is not used for the current block), it is no longer necessary to construct the parameter candidate list and determine the index identification value of the current block. In this case, the model parameter of the current block may be calculated according to the existing technical scheme, and the calculated model parameter is used to generate the chroma prediction value based on the cross-component prediction mode.

In some embodiments, the method may further include the following operation. The reference sample of the current block is determined according to a neighbouring region of the current block. The neighbouring region of the current block includes at least one of: a left neighbouring region of the current block or an above neighbouring region of the current block.

It should be noted that in the embodiments of the present disclosure, the reference sample of the current block may be obtained based on the left neighbouring region of the current block (i.e., the CCLM-L mode). In this case, the model parameter is calculated by using only the left neighbouring region of the current block. Alternatively, the reference sample of the current block may be obtained based on the above neighbouring region of the current block (i.e., the CCLM-T mode). In this case, the model parameter is calculated by using only the above neighbouring region of the current block. Alternatively, the reference sample of the current block may be obtained based on the left neighbouring region of the current block and the above neighbouring region of the current block (i.e., the CCLM-LT mode). In this case, the model parameter is calculated by combining the left neighbouring region of the current block and the above neighbouring region of the current block. The manner of determining the reference sample is not specifically limited herein.

It should be further noted that in the embodiment of the present disclosure, the operation that the reference sample of the current block is determined according to the neighbouring region of the current block may include that the reference sample is determined by performing the filtering on the samples in the neighbouring region. In some embodiments, the operation that the filtering is performed on the samples in the neighbouring region may include the operation that the filtering is performed according to the positions of the samples or the intensity of the color component, thereby determining the reference sample of the current block according to the filtered samples.

Specifically, in the embodiment of the present disclosure, the first reference sample set is composed according to the samples in the neighbouring region of the current block; and then, the filtering is performed on the first reference sample set to determine the reference sample. Herein, the number of reference samples may be N, and N is an integer greater than 0. In other words, N reference samples may be selected from the samples in the neighbouring region. Herein, the value of N may generally be 4, which is not specifically limited.

It should be further noted that in the embodiments of the present disclosure, among the samples in the neighbouring region of the current block, some unimportant samples (for example, the correlation of these samples is poor) or some abnormal samples may exist. In order to ensure the accuracy of prediction, it is necessary to eliminate these samples to obtain effective reference samples.

In some embodiments, the operation that the model parameter of the current block is determined according to reference sample of the current block may include following operations.

A reconstructed luma value and a reconstructed chroma value of the reference sample are determined.

Model parameter calculation is performed according to the reconstructed luma value and the reconstructed chroma value to obtain the model parameter of the current block.

Exemplarily, when the chroma fusion merge mode is not used for the current block, for the derivation of the model parameter, a derivation method for constructing the model parameter based on the regression of the least square method is provided herein. Specifically, the model parameter may be obtained by minimizing the regression error of the reconstructed luma values and the reconstructed chroma values of the reference samples around the current block, which may be a and b as illustrated in the following equations:

$$\begin{cases} a = \dfrac{2N \cdot \sum (L(n) \cdot C(n)) - \sum L(n) \cdot \sum C(n)}{2N \cdot \sum (L(n) \cdot L(n)) - \sum L(n) \cdot \sum L(n)} \\ b = \dfrac{\sum C(n) - a \cdot \sum L(n)}{2N} \end{cases} \tag{8}$$

Here, $L(n)$ denotes down-sampled reconstructed luma values of reference samples corresponding to the left neighbouring region and the above neighbouring region, $C(n)$ denotes the reconstructed chroma values of the reference samples corresponding to the left neighbouring region and the above neighbouring region, and N denotes the number of reference samples.

Furthermore, in the embodiments of the present disclosure, after the model parameter of the current block is determined according to the aforementioned implementation, the target prediction value of the current block may be further determined.

In the embodiments of the present disclosure, when the value of the first syntax identification information isChromaFusion is 1 (i.e., the first syntax identification information indicates that the weighted chroma fusion mode is used for the current block), it is necessary to determine the target prediction value of the current block by combining the cross-component prediction mode and the non-cross-component prediction mode. In some embodiments, the method may further include the following operations.

The first prediction value of the current block based on the cross-component prediction mode is determined.

A second prediction value of the current block based on a non-cross-component prediction mode is determined.

A target prediction value of the current block is determined according to the first prediction value and the second prediction value.

It should be noted that in the embodiments of the present disclosure, the first prediction value may be obtained by performing the chroma prediction using the cross-component prediction mode according to the determined model parameter. Exemplarily, the cross-component prediction mode herein may be the CCLM mode, the MMLM mode, the CCCM mode, or the like, which is not specifically limited herein.

It should be further noted that in the embodiments of the present disclosure, the second prediction value may be obtained by performing the chroma prediction using the non-cross-component prediction mode. Exemplarily, the non-cross-component prediction mode herein may be the Planar mode, the DC mode, the DIMD mode, or the like, which is not specifically limited herein.

Furthermore, in the embodiment of the present disclosure, when the weighted chroma fusion mode is used for the current block, the final target prediction value may be obtained by combining the first prediction value obtained by the cross-component prediction mode and the second prediction value obtained by the non-cross-component prediction mode. Specifically, in some embodiments, the operation that the target prediction value of the current block is determined according to the first prediction value and the second prediction value may include following operations.

A first shift factor is determined.

An offset value of the current block is determined according to the first shift factor.

The target prediction value of the current block is determined according to the offset value, the first prediction value and the second prediction value.

It should be noted that in the embodiment of the present disclosure, the first shift factor may be denoted by shift. Exemplarily, the value of shift is set to be 2. In addition, the offset value of the current block may be set to be 1 « (shift - 1).

In a specific implementation, the operation that the target prediction value of the current block is determined according to the offset value, the first prediction value and the second prediction value may include the following operation. Weighted calculation is performed according to the offset value, the first prediction value and the second prediction value to determine the target prediction value of the current block.

In a more specific implementation, the operation that the target prediction value of the current block is determined according to the offset value, the first prediction value and the second prediction value may include the following operation. A first weighting value and a second weighting value are determined. Weighted calculation is performed according to the first weighting value and the first prediction value, as well as the second weighting value and the second prediction value, to determine a third prediction value. A fourth prediction value is determined according to the offset value and the third prediction value, and shift calculation is performed on the fourth prediction value according to the first shift factor to determine the target prediction value of the current block.

It should be noted that in the embodiments of the present disclosure, the first weighting value may be denoted by w0, and the second weighting value may be denoted by w1. Herein, w0 and w1 may be determined according to the prediction modes of the neighboring blocks; w0+w1=4 and shift=2. Exemplarily, when the cross-component prediction mode is used for both the left neighbouring blocks and the above neighbouring blocks, {w0, w1}={1, 3}. When the non-cross-component prediction mode is used for both the left neighbouring blocks and the above neighbouring blocks, {w0, w1}={3, 1}. In other cases, {w0, w1}={2, 2}.

Exemplarily, pred0 denotes the second prediction value of the current block based on the non-cross-component prediction mode, pred1 denotes the first prediction value of the current block based on the cross-component prediction mode, and pred denotes the final target prediction value of the current block. The specific prediction procedure of this model is as follows:

$$\mathrm{pred} = (\mathrm{w0} * \mathrm{pred0} + \mathrm{w1} * \mathrm{pred1} + (1 \ll (\mathrm{shift} - 1))) \gg \mathrm{shift} \qquad (9)$$

It should be further understood that in the embodiments of the present disclosure, the value of the first syntax identification information may be determined according to the third syntax identification information, the fourth syntax identification information and the fifth syntax identification information. Herein, the third syntax identification information may be denoted by chromaFusionFlag, the fourth syntax identification information may be denoted by chromaFusionType, and the fifth syntax identification information may be denoted by chromaFusionCclm.

In some embodiments, the operation that the value of the first syntax identification information is determined may include following operations.

A value of third syntax identification information is determined.

When the third syntax identification information indicates that a chroma fusion mode is used for the current block, a value of fourth syntax identification information is determined.

When the fourth syntax identification information indicates that a linear model chroma fusion mode is not used for the current block, the value of the first syntax identification information is determined according to the value of the third syntax identification information and the value of the fourth syntax identification information.

In a possible embodiment, when the third syntax identification information indicates that the chroma fusion mode is not used for the current block, the method further includes the operation that the value of the first syntax identification information is set to be equal to the value of the third syntax identification information.

In a possible embodiment, when the fourth syntax identification information indicates that the linear model chroma fusion mode is not used for the current block, the method further includes the operation that the value of the first syntax identification information is set to be the sum of the value of the third syntax identification information and the value of the fourth syntax identification information.

In a possible embodiment, when the fourth syntax identification information indicates that the linear model chroma fusion mode is used for the current block, the method further includes the following operations. A value of fifth syntax identification information is determined. The value of the first syntax identification information is determined according to the value of the third syntax identification information, the value of the fourth syntax identification information and the value of the fifth syntax identification information.

It should be noted that in the embodiments of the present disclosure, the value of the first syntax identification information isChromaFusion may be equal to the sum of the third syntax identification information chromaFusionFlag, the fourth syntax identification information chromaFusionType, and the fifth syntax identification information chromaFusionCclm, which is illustrated in the following formula:

$$\mathrm{isChromaFusion} = \mathrm{chromaFusionFlag} + \mathrm{chromaFusionType} + \mathrm{chromaFusionCclm} \qquad (10)$$

It should be further noted that in the embodiments of the present disclosure, for determining the third syntax identification information, the fourth syntax identification information, and the fifth syntax identification information, in a specific implementation, the method may further include following operations.

When the chroma fusion mode is not used for the current block, it is determined that the value of the third syntax identification information is a first value.

When the chroma fusion mode is used for the current block, it is determined that the value of the third syntax identification information is a second value.

Furthermore, in some embodiments, the method may further include the operation that the value of the third syntax identification information is encoded, and the obtained encoded bits are signalled into the bitstream.

In another specific implementation, the method may further include following operations.

When the linear model chroma fusion mode is not used for the current block, it is determined that the value of the fourth syntax identification information is a first value.

When the linear model chroma fusion mode is used for the current block, it is determined that the value of the fourth syntax identification information is a second value.

Furthermore, in some embodiments, the method may further include the following operations. The value of the fourth syntax identification information is encoded, and the obtained encoded bits are signalled into the bitstream.

In another specific implementation, the method may further include following operations.

When a single linear model chroma fusion mode is used for the current block, it is determined that the value of fifth syntax identification information is a first value.

When a multiple linear model chroma fusion mode is used for the current block, it is determined that the value of the fifth syntax identification information is a second value.

Furthermore, in some embodiments, the method may further include the operation that the value of the fifth syntax identification information is encoded, and the obtained encoded bits are signalled into the bitstream.

In the embodiments of the present disclosure, the first value is different from the second value. Herein, the first value and the second value may be in the form of parameters or numerics. Specifically, the third syntax identification information, the fourth syntax identification information or the fifth syntax identification information herein may be a parameter written in a profile, or may be a value of a flag, which is not specifically limited herein.

In the embodiment of the present disclosure, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein. Exemplarily, in a specific implementation, the first value may be 0 and the second value may be 1.

Exemplarily, when the chroma fusion mode is not used for the current block, the value of the third syntax identification information chromaFusionFlag is 0. In this case, the value of the first syntax identification information isChromaFusion is equal to the value of the third syntax identification information chromaFusionFlag (i.e., the value of the first syntax identification information isChromaFusion is 0).

Exemplarily, when the chroma fusion mode is used for the current block, the value of the third syntax identification information chromaFusionFlag is 1 and the value of the fourth syntax identification information chromaFusionType is 0. In this case, the value of the first syntax identification information isChromaFusion is equal to the sum of the value of the third syntax identification information chromaFusionFlag and the value of the fourth syntax identification information chromaFusionType (i.e., the value of the first syntax identification information isChromaFusion is 1).

Exemplarily, when the single linear model chroma fusion mode is used for the current block, the value of the third syntax identification information chromaFusionFlag is 1, the value of the fourth syntax identification information chromaFusionType is 1, and the value of the fifth syntax identification information chromaFusionCclm is 0. In this case, the value of the first syntax identification information isChromaFusion is equal to the sum of the third syntax identification information chromaFusionFlag, the fourth syntax identification information chromaFusionType and the fifth syntax identification information chromaFusionCelm. That is, the value of the first syntax identification information isChromaFusion is 2.

Exemplarily, when the multiple linear model chroma fusion mode is used for the current block, the value of the third syntax identification information chromaFusionFlag is 1, the value of the fourth syntax identification information chromaFusionType is 1, and the value of the fifth syntax identification information chromaFusionCclm is 1. In this case, the value of the first syntax identification information isChromaFusion is equal to the sum of the third syntax identification information chromaFusionFlag, the fourth syntax identification information chromaFusionType and the fifth syntax identification information chromaFusionCclm. That is, the value of the first syntax identification information isChromaFusion is 3.

Furthermore, in some embodiments, the method may further include the following operations. A value of sixth syntax identification information is determined. When the sixth syntax identification information indicates that a non-cross-component prediction mode is used for the current block, the operation of determining the value of the first syntax identification information is continued to be performed.

It should be noted that in the embodiments of the present disclosure, the chroma fusion mode is used as a supplementary scheme in the non-cross-component prediction mode. When the non-cross-component prediction mode is used for the current block, it is necessary to continue to determine whether the chroma fusion mode is used for the current block and whether the chroma fusion merge mode is used for the current block, thereby determining whether the cross-

EP 4 704 417 A1

component prediction mode is required to be fused with the non-cross-component prediction mode.

Furthermore, in some embodiments, the method may further include the following operations. A value of seventh syntax identification information is determined. When the seventh syntax identification information indicates that the cross-component prediction mode is used for the current block, the operation of determining the value of the first syntax identification information is continued to be performed.

It should be noted that in the embodiments of the present disclosure, the chroma fusion mode is also used as a supplementary scheme in the cross-component prediction mode. When the cross-component prediction mode is used for the current block, it is necessary to continue to determine whether the chroma fusion mode is used for the current block and whether the chroma fusion merge mode is used for the current block, thereby determining whether the cross-component prediction mode is required to be fused with the non-cross-component prediction mode.

Furthermore, for the sixth syntax identification information, the method may further include following operations.

When the non-cross-component prediction mode is not used for the current block, it is determined that the value of the sixth syntax identification information is a first value.

When the non-cross-component prediction mode is used for the current block, it is determined that the value of the sixth syntax identification information is a second value.

In some embodiments, the method may further include the operation that the value of the sixth syntax identification information is encoded, and the obtained encoded bits are signalled into the bitstream.

Furthermore, for the seventh syntax identification information, the method may further include following operations.

When the cross-component prediction mode is not used for the current block, it is determined that the value of the seventh syntax identification information is a first value.

When the cross-component prediction mode is used for the current block, it is determined that the value of the seventh syntax identification information is a second value.

In some embodiments, the method may further include the operation that the value of the seventh syntax identification information is encoded, and the obtained encoded bits are signalled into the bitstream.

It should be noted that in the embodiments of the present disclosure, the first value is different from the second value. Herein, the first value and the second value may be in the form of parameters or numerics. Specifically, the sixth syntax identification information or the seventh syntax identification information herein may be a parameter written in a profile, or may be a value of a flag, which is not specifically limited herein.

It should be further noted that in the embodiments of the present disclosure, the first value may be set to be 1 and the second value may be set to be 0. Alternatively, the first value may be set to be 0 and the second value may be set to be 1. Alternatively, the first value may also be set to be true, and the second value may also be set to be false. Alternatively, the first value may be set to be false, and the second value may be set to be true. The first value and the second value are not specifically limited herein.

In a specific implementation, the first value may be 0 and the second value may be 1. That is to say, when the chroma fusion mode is used as the supplementary scheme in the non-cross-component prediction mode, the value of the sixth syntax identification information may be signalled into the bitstream, so that the decoding side can subsequently determine whether the non-cross-component prediction mode is used for the current block by decoding the bitstream. When the value of the sixth syntax identification information is 1, it represents that the non-cross-component prediction mode is used for the current block. In this case, it is necessary to further perform the operation of determining the value of the first syntax identification information. Alternatively, when the chroma fusion mode is used as the supplementary scheme in the cross-component prediction mode, the value of the seventh syntax identification information may be signalled into the bitstream, so that the decoding side can subsequently determine whether the cross-component prediction mode is used for the current block by decoding the bitstream. When the value of the seventh syntax identification information is 1, iit represents that the cross-component prediction mode is used for the current block. In this case, it is necessary to further perform the operation of determining the value of the first syntax identification information.

Furthermore, the embodiments of the present disclosure provide a bitstream. The bitstream is generated by performing bit encoding according to information to be encoded, and the information to be encoded may include at least one of:

an index identification value of the current block, a value of the first syntax identification information, a value of the second syntax identification information, a value of the third syntax identification information, a value of the fourth syntax identification information, a value of the fifth syntax identification information, a value of the sixth syntax identification information, or a value of the seventh syntax identification information.

In the embodiments of the present disclosure, the first syntax identification information is configured to indicate whether a weighted chroma fusion mode is used for a current block, the second syntax identification information is configured to indicate whether a chroma fusion merge mode is used for the current block, the third syntax identification information is configured to indicate whether a chroma fusion mode is used for the current block, the fourth syntax identification information is configured to indicate whether the linear model chroma fusion mode is used for the current

27

block, the fifth syntax identification information is configured to indicate that a single linear model chroma fusion mode or a bilinear model chroma fusion mode is used for the current block, the sixth syntax identification information is configured to indicate whether a non-cross-component prediction mode is used for the current block, the seventh syntax identification information is configured to indicate whether a cross-component prediction mode is used for the current block.

In this way, after the information to be encoded is signalled at the encoding side, the value of the first syntax identification information may be subsequently determined by decoding the bitstream at the decoding side. Then, when the first syntax identification information indicates that the weighted chroma fusion mode is used for the current block, the bitstream may be continued to be decoded to determine the value of the second syntax identification information. Then, when the second syntax identification information indicates that the chroma fusion merge mode is used for the current block, the bitstream may be further decoded to determine the index identification value of the current block, thereby determining the model parameter of the current block according to the constructed parameter candidate list.

The embodiments of the present disclosure provide an encoding method, which includes the following operations. The value of the first syntax identification information is determined. When the first syntax identification information indicates that the weighted chroma fusion mode is used for the current block, the value of the second syntax identification information is determined. When the second syntax identification information indicates that the chroma fusion merge mode is used for the current block, the parameter candidate list of the current block is constructed. The model parameter is used to determine the first prediction value of the current block based on the cross-component prediction mode. In this way, when the weighted chroma fusion mode is used for the current block, in the case that it is further determined that the chroma fusion merge mode is used for the current block, the parameter candidate list may be constructed, and then the model parameter of the current block may be obtained from the parameter candidate list according to the index identification value. That is, for the cross-component prediction mode in the chroma fusion mode, by optimizing the determination of the model parameter of the cross-component prediction mode, which specifically includes the operation that the linear prediction section in the chroma fusion mode may derive the model parameter through inheritance instead of calculation, and by providing multiple choices for the linear prediction section, the prediction accuracy of the chroma fusion mode may be improved, thereby improving the encoding and decoding efficiency.

In another embodiment of the present disclosure, based on the encoding and decoding method in the above-mentioned embodiments, the embodiment of the present disclosure proposes a linear model merge mode technology based on the chroma fusion mode. According to the technology, based on the existing chroma fusion mode, for the case that the flag bit of the chroma fusion mode is 1, a merge mode is provided for the cross-component prediction section of the chroma fusion mode by combining the technical idea of the cross-component merge mode. In this mode, the model parameter ccmParam of the cross-component prediction section in the chroma fusion mode may be calculated or inherited from the model parameters of the neighbouring blocks. By optimizing the cross-component prediction mode, the overall prediction accuracy of the chroma fusion mode is improved, thereby improving the encoding efficiency.

Specifically, the description of the related syntax elements is illustrated in Table 6. In Table 6, the parts with a dark gray background represent the newly added syntax elements in the embodiments of the present disclosure.

| intraChromaFusionMode() { | |
|---|---|
| **chromaFusionFlag** | ae(v) |
| if ( chromaFusionFlag) | |
| **chromaFusionType** | ae(v) |
| if ( chromaFusionType) | |
| **chromaFusionCclm** | ae(v) |
| isChromaFusion = chromaFusionFlag + chromaFusionType + chromaFusionCelm | |
| | |
| | ae(v) |
| | |
| | ae(v) |
| | |
| } | |

Herein, when the value of the flag bit isChromaFusion is 1, an additional flag bit chromaFusionMrgFlag is introduced to indicate whether the chroma fusion merge mode is used for the current block. In the technology of the present disclosure, the flag bit chromaFusionMrgFlag is encoded in the context manner. When the flag bit chromaFusionMrgFlag is 1, the parsing is continued to obtain the candidate index identification chromaFusionMrgIdx, and the chromaFusionMrgIdx is configured to indicate the position of the linear model parameter that is referred to in the parameter candidate list, thereby determining the inherited linear model parameter ccmParam. In the technology of the present disclosure, the candidate index identification chromaFusionMrgIdx may be encoded by the truncated code manner and shared by two chroma channels Cb/Cr. The correspondence between the candidate index identification chromaFusionMrgIdx and encoded bin is shown in aforementioned Table 5. Herein, the context encoding is performed on each bin in the candidate index identification chromaFusionMrgIdx by using separate context information.

Furthermore, the adding manner of the parameter candidate list ccmList[NUM_LMC_MERGE_CANDS] in the embodiments of the present disclosure is consistent with the adding manner of the parameter candidate list in the cross-component merge mode, and includes the spatial-domain neighbouring candidates, the spatial-domain non-neighbouring candidates, and the CCLM candidates with default parameters.

Furthermore, in the embodiments of the present disclosure, after the source of the cross-component parameter is added herein, the inheritance rule is updated as follows.

1) When the CCLM candidate is inherited, only the scaling parameter is inherited, and the offset parameter is recalculated.
2) When the MMLM candidate is inherited, the scaling parameter and a classification threshold are inherited, and the offset parameter is recalculated. However, when no neighbouring reconstructed sample is available in the category, the offset parameter is also directly inherited.
3) When the CCCM candidate is inherited, all convolution parameters and the classification threshold are inherited.
4) When the GLM candidate is inherited, in a case that the GLM is a three-parameter mode, all the gradient index and model parameters are inherited. Otherwise, in a case that the GLM is a two-parameter mode, only the scaling parameter is inherited, and the offset parameter is required to be recalculated.
5) When the chroma fusion mode is inherited,

in a case that the chroma fusion mode is not the chroma fusion merge mode, the MMLM parameter derived by the cross-component prediction section is inherited as the candidate; and
in a case that the chroma fusion mode is the chroma fusion merge mode, the inheritance manner depends on the candidate mode that is inherited.

6) When the CCMerge candidate is inherited, the inheritance manner depends on the candidate mode that is inherited.

According to the above content, when the value of isChromaFusion is 1, a specific implementation of the decoding side is as follows.

The decoding side performs parsing to determine that the flag bit chromaFusionMrgFlag of the chroma fusion merge mode is 0, which represent that the chroma fusion merge mode is not used for the current block. Therefore, it is not necessary to perform parsing to obtain the chroma fusion merge mode index chromaFusionMrgIdx.

In the subsequent decoding procedure, the cross-component linear model parameter ccmParam is calculated according to the existing scheme in the decoder, and the ccmParam is used to generate the prediction value of the chroma sample.

According to the above content, when the value of isChromaFusion is 1, another specific implementation at the decoding side is as follows.

The decoding side performs parsing to determine that the flag bit chromaFusionMrgFlag of the chroma fusion merge mode is 1, which represent that the chroma fusion merge mode is used for the current block. Therefore, the parsing is continued to obtain the chroma fusion merge mode index chromaFusionMrgIdx.

In the subsequent decoding procedure, the cross-component linear model parameter list ccmList [NUM_LMC_MERGE_CANDS] is generated according to the aforementioned construction procedure of the parameter candidate list. According to the chroma fusion merge mode index, the corresponding cross-component linear model parameter is obtained from the ccmList[NUM_LMC_MERGE_CANDS (i.e., ccmParam=ccmList[chromaFusionMrgIdx]). The final cross-component linear model parameter is determined through the aforementioned parameter inheritance rules of the scheme of the present disclosure to generate the prediction value of the chroma sample.

Furthermore, in the embodiments of the present disclosure, the independent set of rules may be used for the size of the parameter candidate list and construction procedure of the parameter candidate list, instead of sharing the rules of the cross-component merge mode.

Furthermore, in the embodiments of the present disclosure, the chroma fusion mode may serve as a supplement in the non-cross-component prediction mode. Alternatively, the chroma fusion mode may also serve as a branch of the cross-component prediction mode. When the cross-component prediction mode is used, a subsequent supplementary judgment will be made to determine whether the cross-component prediction mode is required to be fused with the non-cross-component prediction mode.

Simply put, the embodiments of the present disclosure mainly provide a new fusion scheme for the chroma fusion mode. According to the technical scheme of the present disclosure, the linear prediction section in the chroma fusion mode may choose to derive the linear model parameter through inheritance, instead of calculation. Furthermore, multiple options can be provided for the prediction solution, thereby improving intra prediction efficiency. Exemplarily, Table 7 shows the test results for of embodiments of the present disclosure. It can be seen from this that the technical solution can improve the prediction efficiency, thereby further improving coding and decoding performance.

Table 7

|  | All Intra Main 10 | | | | |
|  | Over anchor(EE1.5) | | | | |
|  | Y | U | V | EncT | DecT |
| Class A1 | 0.03% | -0.79% | -0.59% | 108% | 100% |
| Class A2 | 0.05% | -0.66% | -0.54% | 111% | 101% |
| Class B | 0.00% | -0.50% | -0.62% | 107% | 100% |
| Class C | 0.00% | -0.43% | -0.38% | 111% | 100% |
| Class E | 0.01% | -0.19% | -0.23% | 108% | 101% |
| **Overall** | 0.01% | -0.51% | -0.48% | 109% | 100% |

In the embodiments of the present disclosure, the specific implementations of the aforementioned embodiments are described in detail through the above embodiments. It can be seen that according to the technical scheme of the aforementioned embodiments, for the cross-component prediction mode in the chroma fusion mode, by optimizing the determination of the model parameters of the cross-component prediction mode and providing multiple choices for the cross-component prediction, the prediction accuracy of the chroma fusion mode can be improved, thereby improving the encoding and decoding efficiency.

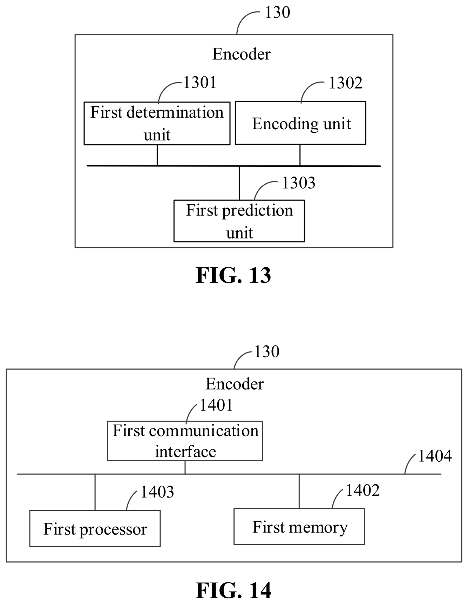

In another embodiment of the present disclosure, based on the same invention concept as the aforementioned embodiments, with reference to FIG. 13, a schematic diagram of a composition structure of an encoder according to an embodiment of the present disclosure is illustrated. As illustrated in FIG. 13, the encoder 130 may include a first determination unit 1301.

The first determination unit 1301 is configured to: determine a value of first syntax identification information; and when the first syntax identification information indicates that a weighted chroma fusion mode is used for a current block, determine a value of second syntax identification information.

The first determination unit 1301 is further configured to: when the second syntax identification information indicates that a chroma fusion merge mode is used for the current block, construct a parameter candidate list of the current block; and determine a model parameter of the current block according to the parameter candidate list. The model parameter is used to determine a first prediction value of the current block based on a cross-component prediction mode.

In some embodiments, the first determination unit 1301 is further configured to: when the second syntax identification information indicates that the chroma fusion merge mode is not used for the current block, determine the model parameter of the current block according to a reference sample of the current block. The model parameter is used to determine a first prediction value of the current block based on the cross-component prediction mode.

In some embodiments, the first determination unit 1301 is further configured to determine a reference sample of the current block according to a neighbouring region of the current block. The neighbouring region of the current block includes at least one of: a left neighbouring region of the current block or an above neighbouring region of the current block.

In some embodiments, the first determination unit 1301 is further configured to determine a reconstructed luma value and a reconstructed chroma value of the reference sample, and calculate the model parameter of the current block according to the reconstructed luma value and the reconstructed chroma value.

In some embodiments, the first determination unit 1301 is further configured to: determine neighbouring blocks of the current block; when the cross-component prediction mode is used for at least one block of the neighbouring blocks, determine a respective model parameter of each of the at least one block to obtain at least one set of first candidate model parameters; and add the at least one set of first candidate model parameters into the parameter candidate list.

In some embodiments, the neighbouring blocks include: a block neighbouring the current block in a spatial domain and/or a block neighbouring the current block in a temporal domain.

In some embodiments, the first determination unit 1301 is further configured to: when the parameter candidate list is in an unfilled state, determine non-neighbouring blocks of the current block; when the cross-component prediction mode is used for at least one block of the non-neighbouring blocks, determine a respective model parameter of each of the at least one block to obtain at least one set of second candidate model parameters; and continue to add the at least one set of second candidate model parameters into the parameter candidate list.

In some embodiments, the first determination unit 1301 is further configured to: when the parameter candidate list is in the unfilled state, determine at least one set of third candidate model parameters according to preset parameter information; and continue to add the at least one set of third candidate model parameters into the parameter candidate list.

In some embodiments, the preset parameter information at least includes a preset value of a first model parameter, and the preset value of the first model parameter is at least one of 0, 1/8, -1/8, 2/8, -2/8, or 3/8.

In some embodiments, the cross-component prediction mode includes at least one of a CCLM mode, a MMLM mode, a CCCM mode, a GLM mode, a chroma fusion mode, or a CCMerge mode.

In some embodiments, the first determination unit 1301 is further configured to: perform cost calculation on at least two sets of candidate model parameters in the parameter candidate list to determine a respective cost value of each of the at least two sets of candidate model parameters; and determine a minimum cost value from the cost values of the at least two sets of candidate model parameters, and determine the model parameter of the current block according to a set of candidate model parameters corresponding to the minimum cost value.

In some embodiments, with reference to FIG. 13, the encoder 130 may further include an encoding unit 1302.

The first determination unit 1301 is further configured to: determine an index identification value of the current block. The index identification value is configured to indicate an index number of the set of candidate model parameters corresponding to the minimum cost value in the parameter candidate list.

The encoding unit 1302 is configured to encode the index identification value, and signal obtained encoded bits into a bitstream.

In some embodiments, the first determination unit 1301 is further configured to: determine an inheritance mode of the current block and corresponding candidate model parameters according to the set of candidate model parameters corresponding to the minimum cost value; and determine the model parameter of the current block according to the inheritance mode of the current block and the candidate model parameters.

In some embodiments, the first determination unit 1301 is further configured to: when the inheritance mode of the current block is the CCLM mode, determine that the current block inherits a first model parameter among the candidate model parameters; when the inheritance mode of the current block is the MMLM mode, determine that the current block inherits the first model parameter and a classification threshold among the candidate model parameters; when the inheritance mode of the current block is the CCCM mode, determine that the current block inherits a convolution parameter and the classification threshold among the candidate model parameters; when the inheritance mode of the current block is the GLM mode, in a case that the GLM mode is a three-parameter mode, determine that the current block inherits a gradient index value, the first model parameter and a second model parameter among the candidate model parameters, or in a case that the GLM mode is a two-parameter mode, determine that the current block inherits the first model parameter among the candidate model parameters; when the inheritance mode of the current block is the chroma fusion mode, in a case that the chroma fusion mode is the chroma fusion merge mode, determine a prediction mode inherited by the current block and determine the model parameter of the current block according to the prediction mode inherited by the current block and the candidate model parameters, or in a case that the chroma fusion mode is not the chroma fusion merge mode, determine that the MMLM mode is used for the current block and determine that the current block inherits the first model parameter and the classification threshold among the candidate model parameters; when the inheritance mode of the current block is the CCMerge mode, determine the prediction mode inherited by the current block, and determine the model parameter of the current block according to the prediction mode inherited by the current block and the candidate model parameters.

In some embodiments, the model parameter of the current block includes a first model parameter and a second model parameter. The first model parameter is configured to indicate a scaling parameter when the cross-component prediction mode is used for the current block, and the second model parameter is configured to indicate an offset parameter when the cross-component prediction mode is used for the current block.

In some embodiments, with reference to FIG. 13, the encoder 130 may further include a first prediction unit 1303. The first prediction unit 1303 is configured to: determine the first prediction value of the current block based on the cross-component prediction mode; determine a second prediction value of the current block based on a non-cross-component prediction mode; and determine a target prediction value of the current block according to the first prediction value and the second prediction value.

In some embodiments, the first determination unit 1301 is further configured to: determine a first shift factor; and determine an offset value of the current block according to the first shift factor.

The first prediction unit 1303 is further configured to: determine the target prediction value of the current block according to the offset value, the first prediction value and the second prediction value.

In some embodiments, the first prediction unit 1303 is further configured to: perform weighted calculation according to the offset value, the first prediction value and the second prediction value to determine the target prediction value of the current block.

In some embodiments, the first prediction unit 1303 is further configured to: determine a first weighting value and a second weighting value; perform weighted calculation according to the first weighting value and the first prediction value, as well as the second weighting value and the second prediction value, to determine a third prediction value; determine a fourth prediction value according to the offset value and the third prediction value; and perform shift calculation on the fourth prediction value according to the first shift factor to determine the target prediction value of the current block.

In some embodiments, the encoding unit 1302 is further configured to encode the value of the second syntax identification information and signal the obtained encoded bits into the bitstream.

In some embodiments, the encoding unit 1302 is further configured to: encode the value of the second syntax identification information based on a context manner; and signal the obtained encoded bits into the bitstream.

In some embodiments, the encoding unit 1302 is further configured to: encode the index identification value based on a truncated binary code manner; and signal the obtained encoded bits into the bitstream.

In some embodiments, the first determination unit 1301 is further configured to: determine a value of third syntax identification information; when the third syntax identification information indicates that a chroma fusion mode is used for the current block, determine a value of fourth syntax identification information; and when the fourth syntax identification information indicates that a linear model chroma fusion mode is not used for the current block, determine the value of the first syntax identification information according to the value of the third syntax identification information and the value of the fourth syntax identification information.

In some embodiments, the first determination unit 1301 is further configured to: set the value of the first syntax identification information to be equal to a sum of the value of the third syntax identification information and the value of the fourth syntax identification information.

In some embodiments, the first determination unit 1301 is further configured to: when the third syntax identification information indicates that the chroma fusion mode is not used for the current block, set the value of the first syntax identification information to be equal to the value of the third syntax identification information.

In some embodiments, the first determination unit 1301 is further configured to: when the fourth syntax identification information indicates that the linear model chroma fusion mode is used for the current block, determine a value of fifth syntax identification information; and determine the value of the first syntax identification information according to the value of the third syntax identification information, the value of the fourth syntax identification information and the value of the fifth syntax identification information.

In some embodiments, the first determination unit 1301 is further configured to: when a single linear model chroma fusion mode is used for the current block, determine that the value of fifth syntax identification information is a first value; and when a multiple linear model chroma fusion mode is used for the current block, determine that the value of the fifth syntax identification information is a second value.

In some embodiments, the encoding unit 1302 is further configured to: encode the value of the fifth syntax identification information; and signal the obtained encoded bits into the bitstream.

In some embodiments, the first determination unit 1301 is further configured to: when the chroma fusion mode is not used for the current block, determine that the value of the third syntax identification information is a first value; and when the chroma fusion mode is used for the current block, determine that the value of the third syntax identification information is a second value.

In some embodiments, the encoding unit 1302 is further configured to: encode the value of the third syntax identification information; and signal the obtained encoded bits into the bitstream.

In some embodiments, the first determination unit 1301 is further configured to: when the linear model chroma fusion mode is not used for the current block, determine that the value of the fourth syntax identification information is a first value; and when the linear model chroma fusion mode is used for the current block, determine that the value of the fourth syntax identification information is a second value.

In some embodiments, the encoding unit 1302 is further configured to: encode the value of the fourth syntax identification information; and signal the obtained encoded bits into the bitstream.

In some embodiments, the first determination unit 1301 is further configured to: when the chroma fusion mode is not used for the current block, determine that the value of the first syntax identification information is a first value; when the weighted chroma fusion mode is used for the current block, determine that the value of the first syntax identification information is a second value; when a single linear model chroma fusion mode is used for the current block, determine that the value of the first syntax identification information is a third value; when a multiple linear model chroma fusion mode is used for the current block, determine that the value of the first syntax identification information is a fourth value.

In some embodiments, the first value is 0, the second value is 1, the third value is 2, and the fourth value is 3.

In some embodiments, the encoding unit 1302 is further configured to: encode the value of the first syntax identification information, and signal the obtained encoded bits into the bitstream.

In some embodiments, the first determination unit 1301 is further configured to: determine a value of sixth syntax identification information; and when the sixth syntax identification information indicates that a non-cross-component prediction mode is used for the current block, continue to perform the operation of determining the value of the first syntax identification information.

In some embodiments, the encoding unit 1302 is further configured to: encode the value of the sixth syntax identification information; and signal the obtained encoded bits into the bitstream.

In some embodiments, the first determination unit 1301 is further configured to: determine a value of seventh syntax identification information; and when the seventh syntax identification information indicates that the cross-component prediction mode is used for the current block, continue to perform the operation of determining the value of the first syntax identification information.

In some embodiments, the encoding unit 1302 is further configured to: encode the value of the seventh syntax identification information; and signal the obtained encoded bits into the bitstream.

It can be understood that in the embodiments of the present disclosure, a "unit" may be a part of a circuit, a part of a processor, a part of programs or software, etc. Of course the "unit" may also be a module, or may be non-modular. Moreover, the various components in the embodiments of the present disclosure may be integrated in one processing unit, or each unit may exist physically alone, or two or more units may be integrated in one unit. The integrated unit may be implemented either in the form of hardware or in the form of software function module.

If the integrated unit is implemented in the form of software functional modules and sold or used as an independent product, it may also be stored in a computer-readable storage medium. Based on such understanding, technical solutions of the embodiments of the present disclosure substantially or parts making contributions to the related art may be embodied in the form of software. The computer software product is stored in a storage medium, includes several instructions to cause a computer device (which may be a personal computer, a server, a network device, etc.) or a processor to perform all or part of the operations of the method according to the embodiments of the present disclosure. The above storage media may include: a U disk, a removable hard disk, a Read-Only Memory (ROM), a Random Access Memory (RAM), a disk or an optical disk and other media that can store program codes.

Therefore, the embodiments of the present disclosure provide a computer-readable storage medium applied to the encoder 130. The computer-readable storage medium is configured to store a computer program that, when executed by a first processor, cause the first processor to implement the method of any of the aforementioned embodiments.

Based on the composition of the encoder 130 and the computer-readable storage medium described above, with reference to FIG. 14, a schematic diagram of a specific hardware structure of an encoder 130 according to an embodiment of the present disclosure is illustrated. As illustrated in FIG. 14, the encoder 130 may include a first communication interface 1401, a first memory 1402 and a first processor 1403. The components are coupled together via a first bus system 1404. It can be understood that the first bus system 1404 is configured to implement connection communication between these components. The first bus system 1404 includes a power bus, a control bus and a status signal bus in addition to a data bus. However, for the sake of clarity, the various buses are designated in FIG. 14 as the first bus system 1404.

The first communication interface 1401 is configured to receive and send signal in the process of sending and receiving information with other external network elements.

The first memory 1402 is configured to store computer programs capable of running on the first processor 1403.

The first processor 1403 is configured to run the computer programs to perform the following operations.

The value of the first syntax identification information is determined.

When the first syntax identification information indicates that the weighted chroma fusion mode is used for the current block, the value of the second syntax identification information is determined.

When the second syntax identification information indicates that the chroma fusion merge mode is used for the current block, a parameter candidate list of the current block is constructed.

A model parameter of the current block is determined according to the parameter candidate list. The model parameter is used to determine a first prediction value of the current block based on a cross-component prediction mode.

It can be understood that the first memory 1402 in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external high-speed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It should be noted that the memory 1402 of the system and methods described herein is intended to include, but not be limited to, memories of these and any other suitable types.

The first processor 1403 may be an integrated circuit chip with signal processing capacity. In the implementation process, various operations of the above methods may be completed by integrated logic circuits of hardware in the first processor 1403 or instructions in the form of software. The above first processor 1403 may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the first memory 1402, and the first processor 1403 reads information in the first memory 1402 and completes the steps in the foregoing methods in combination with hardware of the processor.

It can be understood that the embodiments described herein may be implemented in hardware, software, firmware, middleware, microcode or a combination thereof. For the hardware implementation, the processing unit may be implemented in one or more Application Specific Integrated Circuits (ASICs), Digital Signal Processors (DSPDs), Digital Signal Processing Devices (DSPDs), Programmable Logic Devices (PLDs), Field-Programmable Gate Arrays (FPGAs), general purpose processors, controllers, microcontrollers, microprocessors, other electronic units or combinations thereof for performing the functions described herein. For software implementations, the technology described herein may be implemented by modules (e.g. procedures, functions, etc.) that perform the functions described herein. The software codes may be stored in memory and executed by a processor. The memory can be implemented in the processor or outside the processor.

Optionally, as another embodiment, the first processor 1403 is further configured to perform the method described in any one of the aforementioned embodiments when running the computer program.

The embodiments provide an encoder. n the encoder, when the weighted chroma fusion mode is used for the current block, in the case that it is further determined that the chroma fusion merge mode is used for the current block, the parameter candidate list may be constructed, and the model parameter of the current block may be acquired from the parameter candidate list according to the index identification value. The model parameter may be configured to determine the first prediction value of the current block in the cross-component prediction mode. That is, for the cross-component prediction mode in the chroma fusion mode, by optimizing the determination of the model parameter in the cross-component prediction mode and providing multiple choices for the cross-component prediction, the prediction accuracy of the chroma fusion mode can be improved, thereby improving the encoding and decoding efficiency and the encoding and decoding performance.

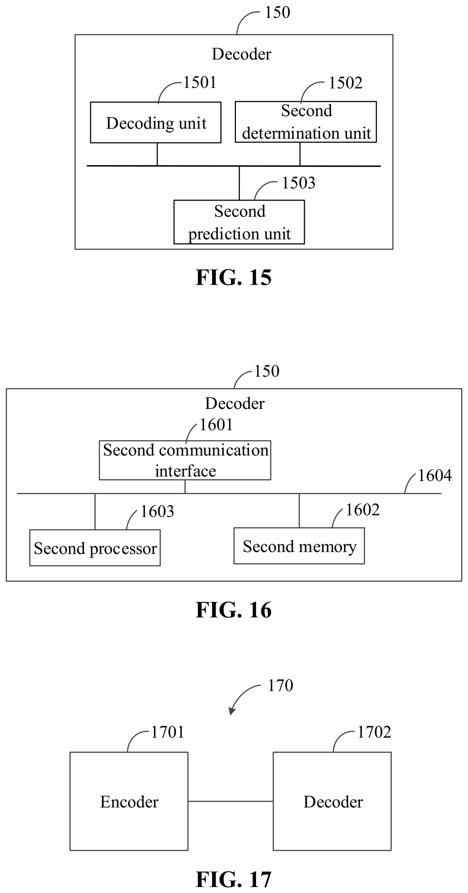

In another embodiment of the present disclosure, based on the same invention concept as the aforementioned embodiments, with reference to FIG. 15, a schematic diagram of a composition structure of a decoder according to an embodiment of the present disclosure is illustrated. As illustrated in FIG. 15, the decoder 150 may include a decoding unit 1501 and a second determination unit 1502.

The decoding unit 1501 is configured to: decode a bitstream to determine a value of first syntax identification information; and when the first syntax identification information indicates that a weighted chroma fusion mode is used for a current block, decode the bitstream to determine a value of second syntax identification information; when the second syntax identification information indicates that a chroma fusion merge mode is used for the current block, decode the bitstream to determine an index identification value of the current block.

The second determination unit 1502 is configured to: construct a parameter candidate list of the current block, and determine a model parameter of the current block according to the parameter candidate list and the index identification value. The model parameter is used to determine a first prediction value of the current block based on a cross-component prediction mode.

In some embodiments, the second determination unit 1502 is further configured to: when the second syntax identification information indicates that the chroma fusion merge mode is not used for the current block, determine the model parameter of the current block according to a reference sample of the current block. The model parameter is used to determine the first prediction value of the current block based on the cross-component prediction mode.

In some embodiments, the second determination unit 1502 is further configured to: determine the reference sample of the current block according to a neighbouring region of the current block. The neighbouring region of the current block includes at least one of: a left neighbouring region of the current block or an above neighbouring region of the current block.

In some embodiments, the second determination unit 1502 is further configured to: determine a reconstructed luma value and a reconstructed chroma value of the reference sample; and perform model parameter calculation according to the reconstructed luma value and the reconstructed chroma value to obtain the model parameter of the current block.

In some embodiments, the second determination unit 1502 is further configured to: determine neighbouring blocks of the current block; and when the cross-component prediction mode is used for at least one block of the neighbouring blocks, determine a respective model parameter of each of the at least one block to obtain at least one set of first candidate model parameters; and add the at least one set of first candidate model parameters into the parameter candidate list.

In some embodiments, the neighbouring blocks include: a block neighbouring the current block in a spatial domain and/or a block neighbouring the current block in a temporal domain.

In some embodiments, the second determination unit 1502 is further configured to: when the parameter candidate list is in an unfilled state, determine non-neighbouring blocks of the current block; when the cross-component prediction mode is used for at least one block of the non-neighbouring blocks, determine a respective model parameter of each of the at least one block to obtain at least one set of second candidate model parameters; and continue to add the at least one set of second candidate model parameters into the parameter candidate list.

In some embodiments, the second determination unit 1502 is further configured to: when the parameter candidate list is in an unfilled state, determine at least one set of third candidate model parameters according to preset parameter information; and continue to add the at least one set of third candidate model parameters into the parameter candidate list.

In some embodiments, the preset parameter information at least includes a preset value of a first model parameter, and the preset value of the first model parameter is at least one of 0, 1/8, -1/8, 2/8, -2/8, or 3/8.

In some embodiments, the cross-component prediction mode includes at least one of a CCLM mode, a MMLM mode, a CCCM mode, a GLM mode, a chroma fusion mode, or a CCMerge mode.

In some embodiments, the second determination unit 1502 is further configured to: determine, from the parameter candidate list, a set of candidate model parameters corresponding to the index identification value; determine an inheritance mode of the current block and corresponding candidate model parameters according to the set of candidate model parameters; and determine the model parameter of the current block according to the inheritance mode of the current block and the candidate model parameters.

In some embodiments, the second determination unit 1502 is further configured to: when the inheritance mode of the current block is the CCLM mode, determine that the current block inherits a first model parameter among the candidate model parameters; when the inheritance mode of the current block is the MMLM mode, determine that the current block inherits the first model parameter and a classification threshold among the candidate model parameters; when the inheritance mode of the current block is the CCCM mode, determine that the current block inherits a convolution parameter and the classification threshold among the candidate model parameters; when the inheritance mode of the current block is the GLM mode, in a case that the GLM mode is a three-parameter mode, determine that the current block inherits a gradient index value, the first model parameter and a second model parameter among the candidate model parameters, or in a case that the GLM mode is a two-parameter mode, determine that the current block inherits the first model parameter among the candidate model parameters; when the inheritance mode of the current block is the chroma fusion mode, in a case that the chroma fusion mode is the chroma fusion merge mode, determine a prediction mode inherited by the current block and determine the model parameter of the current block according to the prediction mode inherited by the current block and the candidate model parameters, or in a case that the chroma fusion mode is not the chroma fusion merge mode, determine that the MMLM mode is used for the current block and determine that the current block inherits the first model parameter and the classification threshold among the candidate model parameters; when the inheritance mode of the current block is the CCMerge mode, determine the prediction mode inherited by the current block, and determine the model parameter of the current block according to the prediction mode inherited by the current block and the candidate model parameters.

In some embodiments, the model parameter of the current block includes a first model parameter and a second model parameter, the first model parameter is configured to indicate a scaling parameter when the cross-component prediction mode is used for the current block, and the second model parameter is configured to indicate an offset parameter when the cross-component prediction mode is used for the current block.

In some embodiments, with reference to FIG. 15, the decoder 150 may further include a second prediction unit 1503. The second prediction unit 1503 is configured to: determine a first prediction value of the current block based on the cross-component prediction mode; determine a second prediction value of the current block based on a non-cross-component prediction mode; and determine a target prediction value of the current block according to the first prediction value and the second prediction value.

In some embodiments, the second determination unit 1502 is further configured to: determine a first shift factor; determine an offset value of the current block according to the first shift factor.

The second prediction unit 1503 is further configured to determine the target prediction value of the current block according to the offset value, the first prediction value and the second prediction value.

In some embodiments, the second prediction unit 1503 is further configured to perform weighted calculation according to the offset value, the first prediction value and the second prediction value to determine the target prediction value of the current block.

In some embodiments, the second prediction unit 1503 is further configured to: determine a first weighting value and a second weighting value; perform weighted calculation according to the first weighting value and the first prediction value, as well as the second weighting value and the second prediction value, to determine a third prediction value; determine a fourth prediction value according to the offset value and the third prediction value; and perform shift calculation on the fourth prediction value according to the first shift factor to determine the target prediction value of the current block.

In some embodiments, the decoding unit 1501 is further configured to: decode the bitstream based on a context manner to determine the value of the second syntax identification information.

In some embodiments, the decoding unit 1501 is further configured to: decode the bitstream based on a truncated binary code manner to determine the index identification value of the current block.

In some embodiments, the decoding unit 1501 is further configured to: decode a bitstream to determine a value of third syntax identification information; and when the third syntax identification information indicates that a chroma fusion mode is used for the current block, decode the bitstream to determine a value of fourth syntax identification information.

The second determination unit 1502 is further configured to: when the fourth syntax identification information indicates that a linear model chroma fusion mode is not used for the current block, determine the value of the first syntax identification information according to the value of the third syntax identification information and the value of the fourth syntax identification information.

In some embodiments, the second determination unit 1502 is further configured to: set the value of the first syntax identification information to be equal to a sum of the value of the third syntax identification information and the value of the fourth syntax identification information.

In some embodiments, the second determination unit 1502 is further configured to: when the third syntax identification information indicates that the chroma fusion mode is not used for the current block, set the value of the first syntax identification information to be equal to the value of the third syntax identification information.

In some embodiments, the decoding unit 1501 is further configured to: when the fourth syntax identification information indicates that the linear model chroma fusion mode is used for the current block, decode the bitstream to determine a value of fifth syntax identification information.

The second determination unit 1502 is further configured to: determine the value of the first syntax identification information according to the value of the third syntax identification information, the value of the fourth syntax identification information and the value of the fifth syntax identification information.

In some embodiments, the second determination unit 1502 is further configured to: when the value of the fifth syntax identification information is a first value, determine that the fifth syntax identification information indicates that a single linear model chroma fusion mode is used for the current block; and when the value of the fifth syntax identification information is a second value, determine that the fifth syntax identification information indicates that a multiple linear model chroma fusion mode is used for the current block.

In some embodiments, the second determination unit 1502 is further configured to: when the value of the third syntax identification information is a first value, determine that the third syntax identification information indicates that the chroma fusion mode is not used for the current block; and when the value of the third syntax identification information is a second value, determine that the third syntax identification information indicates that the chroma fusion mode is used for the current block.

In some embodiments, the second determination unit 1502 is further configured to: when the value of the fourth syntax identification information is a first value, determine that the fourth syntax identification information indicates that the linear model chroma fusion mode is not used for the current block; and when the value of the fourth syntax identification information is a second value, determine that the fourth syntax identification information indicates that the linear model chroma fusion mode is used for the current block.

In some embodiments, the second determination unit 1502 is further configured to: when the value of the first syntax identification information is a first value, determine that the first syntax identification information indicates that a chroma fusion mode is not used for the current block; when the value of the first syntax identification information is a second value, determine that the first syntax identification information indicates that the weighted chroma fusion mode is used for the current block; when the value of the first syntax identification information is a third value, determine that the first syntax identification information indicates that a single linear model chroma fusion mode is used for the current block; and when the value of the first syntax identification information is a fourth value, determine that the first syntax identification information indicates that a multiple linear model chroma fusion mode is used for the current block.

In some embodiments, the first value is 0, the second value is 1, the third value is 2, and the fourth value is 3.

In some embodiments, the decoding unit 1501 is further configured to: decode the bitstream to determine a value of sixth syntax identification information; and when the sixth syntax identification information indicates that a non-cross-component prediction mode is used for the current block, continue to perform the operation of decoding the bitstream to determine the value of the first syntax identification information.

In some embodiments, the decoding unit 1501 is further configured to: decode the bitstream to determine a value of seventh syntax identification information; and when the seventh syntax identification information indicates that the cross-component prediction mode is used for the current block, continue to perform the operation of decoding the bitstream to determine the value of the first syntax identification information.

It can be understood that in the embodiments of the present disclosure, a "unit" may be a part of a circuit, a part of a processor, a part of programs or software, etc. Of course the "unit" may also be a module, or may be non-modular. Moreover, the various components in the embodiments of the present disclosure may be integrated in one processing unit, or each unit may exist physically alone, or two or more units may be integrated in one unit. The integrated unit may be implemented either in the form of hardware or in the form of software function module.

If the integrated unit is implemented in the form of software functional modules and sold or used as an independent product, it can be stored in a computer readable storage medium. Based on such understanding, the present embodiment provides a computer-readable storage medium applied to the decoder 150, and the computer-readable storage medium having stored thereon a computer program that, when executed by a second processor, causes the second processor to implement the method described in any one of the preceding embodiments.

Based on the composition of the decoder 150 and the computer-readable storage medium described above, with reference to FIG. 16, a schematic diagram of a specific hardware structure of a decoder 150 according to an embodiment of the present disclosure is illustrated. As illustrated in FIG. 16, the decoder 150 may include a second communication interface 1601, a second memory 1602 and a second processor 1603. The components are coupled together by a second bus system 1604. It can be understood that the second bus system 1604 is configured to implement connection communication between these components. The second bus system 1604 includes a power bus, a control bus and a status signal bus in addition to a data bus. However, for the sake of clarity, the various buses are designated in FIG. 16 as the second bus system 1604.

The second communication interface 1601 is configured to receive and send signal in the process of sending and receiving information with other external network elements.

The second memory 1602 is configured to store computer programs that can be run on the second processor 1603.

The second processor 1603 is configured to, when running the computer programs, run the computer programs to perform the following three operations.

The bitstream is decoded to determine the value of the first syntax identification information.

When the first syntax identification information indicates that the weighted chroma fusion mode is used for the current block, the bitstream is decoded to determine the value of the second syntax identification information.

When the second syntax identification information indicates that the chroma fusion merge mode is used for the current block, the bitstream is decoded to determine the index identification value of the current block.

A parameter candidate list of the current block is constructed, and a model parameter of the current block is determined according to the parameter candidate list and the index identification value. The model parameter is used to determine a first prediction value of the current block based on a cross-component prediction mode.

Optionally, as another embodiment, the second processor 1603 is further configured to perform the method described in any one of the aforementioned embodiments when the computer program is run.

It can be understood that the second memory 1602 has the hardware functions similar to those of the first memory 1402, and the second processor 1603 has the hardware functions similar to those of the first processor 1403, which are not described in detail.

The embodiment provides a decoder. In the decoder, when the weighted chroma fusion mode is used for the current block, in a case that it is further determined that the chroma fusion merge mode is used for the current block, the parameter candidate list may be constructed, and then the model parameter of the current block may be acquired from the parameter candidate list according to the index identification value. The model parameter may be configured to determine the first prediction value of the current block in the cross-component prediction mode. That is, for the cross-component prediction mode in the chroma fusion mode, by optimizing the determination of the model parameter in the cross-component prediction mode and providing multiple choices for the cross-component prediction, the prediction accuracy of the chroma fusion mode can be improved, thereby improving the encoding and decoding efficiency and the encoding and decoding performance.

In another embodiment of the present disclosure, with reference to FIG. 17, a schematic diagram of a composition structure of an encoding and decoding system according to an embodiment of the present disclosure is illustrated. As illustrated in FIG. 17, the encoding and decoding system 170 may include an encoder 1701 and a decoder 1702.

In the embodiments of the present disclosure, the encoder 1701 may be the encoder described in any one of the aforementioned embodiments, and the decoder 1702 may be the decoder described in any one of the aforementioned embodiments.

It should be noted that, in this disclosure, the terms "include", "comprise" or any other variation thereof, are intended to cover a non-exclusive inclusion, such that a process, method, article, or device that includes a list of elements includes not only those elements but also other elements not expressly listed, or also includes elements inherent to such process, method, article, or device. Without further restrictions, an element defined by the phrase "including one..." does not preclude the presence of additional identical elements in the process, method, article, or apparatus that includes the element.

The serial numbers of the above-described embodiments of the present disclosure are merely for descriptive purposes and do not represent the superiority or inferiority of the embodiments.

The methods disclosed in several method embodiments provided in the present disclosure can be arbitrarily combined without conflict to obtain new method embodiments.

The features disclosed in several product embodiments provided in the present disclosure can be arbitrarily combined without conflict to obtain new product embodiments.

The features disclosed in several methods or device embodiments provided in the present disclosure can be arbitrarily combined without conflict to obtain new method embodiments or device embodiments.

The above descriptions are merely specific implementations of the disclosure, but the scope of protection of the present application is not limited thereto. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

INDUSTRIAL APPLICABILITY

In the embodiment of the present disclosure, shether at the encoding side or the decoding side, when the weighted chroma fusion mode is used for the current block, in a case that it is further determined that the chroma fusion merge mode is used for the current block, the parameter candidate list may be constructed, and then the model parameter of the current block may be acquired from the parameter candidate list according to the index identification value. The model parameter may be configured to determine the first prediction value of the current block in the cross-component prediction mode. That is to say, for the cross-component prediction mode in the chroma fusion mode, the corresponding model parameters may be obtained by means of inheritance, rather than being obtained through calculation, and the manner of inheritance herein may also provide various choices for the cross-component prediction. In this way, by optimizing the determination of the model parameter of the cross-component prediction mode, the overall prediction accuracy of the chroma fusion mode can be improved, thereby improving the encoding and decoding efficiency and the encoding and decoding performance.

**Claims**

1. A decoding method, applied to a decoder, the method comprising:

   decoding a bitstream to determine a value of first syntax identification information;
   when the first syntax identification information indicates that a weighted chroma fusion mode is used for a current block, decoding the bitstream to determine a value of second syntax identification information;
   when the second syntax identification information indicates that a chroma fusion merge mode is used for the current block, decoding the bitstream to determine an index identification value of the current block; and
   constructing a parameter candidate list of the current block, and determining a model parameter of the current block according to the parameter candidate list and the index identification value, wherein the model parameter is used to determine a first prediction value of the current block based on a cross-component prediction mode.

2. The method of claim 1, further comprising:
   when the second syntax identification information indicates that the chroma fusion merge mode is not used for the current block, determining the model parameter of the current block according to a reference sample of the current block, wherein the model parameter is used to determine the first prediction value of the current block based on the cross-component prediction mode.

3. The method of claim 2, further comprising:

   determining the reference sample of the current block according to a neighbouring region of the current block, wherein the neighbouring region of the current block comprises at least one of a left neighbouring region of the current block or an above neighbouring region of the current block.

4. The method of claim 2, wherein determining the model parameter of the current block according to the reference sample of the current block comprises:

   determining a reconstructed luma value and a reconstructed chroma value of the reference sample; and

performing model parameter calculation according to the reconstructed luma value and the reconstructed chroma value to obtain the model parameter of the current block.

5. The method of claim 1, wherein constructing the parameter candidate list of the current block comprises:

determining neighbouring blocks of the current block;
when the cross-component prediction mode is used for at least one block of the neighbouring blocks, determining a respective model parameter of each of the at least one block to obtain at least one set of first candidate model parameters; and
adding the at least one set of first candidate model parameters into the parameter candidate list.

6. The method of claim 5, wherein the neighbouring blocks comprise a block neighbouring the current block in a spatial domain and/or a block neighbouring the current block in a temporal domain.

7. The method of claim 5, wherein when the parameter candidate list is in an unfilled state, constructing the parameter candidate list of the current block further comprises:

determining non-neighbouring blocks of the current block;
when the cross-component prediction mode is used for at least one block of the non-neighbouring blocks, determining a respective model parameter of each of the at least one block to obtain at least one set of second candidate model parameters; and
continuing to add the at least one set of second candidate model parameters into the parameter candidate list.

8. The method of claim 7, wherein when the parameter candidate list is in the unfilled state, constructing the parameter candidate list of the current block further comprises:

determining at least one set of third candidate model parameters according to preset parameter information; and
continuing to add the at least one set of third candidate model parameters into the parameter candidate list.

9. The method of claim 8, wherein the preset parameter information at least comprises a preset value of a first model parameter, and the preset value of the first model parameter is at least one of 0, 1/8, -1/8, 2/8, -2/8, or 3/8.

10. The method of any one of claims 1 to 9, wherein the cross-component prediction mode comprises at least one of a Cross-Component Linear Model (CCLM) mode, a Multi-Model Linear Model (MMLM) mode, a Convolutional Cross-Component Model (CCCM) mode, a Gradient Linear Model (GLM) mode, a chroma fusion mode, or a Cross-Component Merge (CCMerge) mode.

11. The method of claim 10, wherein determining the model parameter of the current block according to the parameter candidate list and the index identification value comprises:

determining, from the parameter candidate list, a set of candidate model parameters corresponding to the index identification value;
determining an inheritance mode of the current block and corresponding candidate model parameters according to the set of candidate model parameters; and
determining the model parameter of the current block according to the inheritance mode of the current block and the candidate model parameters.

12. The method of claim 11, wherein determining the model parameter of the current block according to the inheritance mode of the current block and the candidate model parameters comprises:

when the inheritance mode of the current block is the CCLM mode, determining that the current block inherits a first model parameter among the candidate model parameters;
when the inheritance mode of the current block is the MMLM mode, determining that the current block inherits the first model parameter and a classification threshold among the candidate model parameters;
when the inheritance mode of the current block is the CCCM mode, determining that the current block inherits a convolution parameter and the classification threshold among the candidate model parameters;
when the inheritance mode of the current block is the GLM mode, in a case that the GLM mode is a three-parameter mode, determining that the current block inherits a gradient index value, the first model parameter and a second model parameter among the candidate model parameters; or in a case that the GLM mode is a two-parameter mode, determining that the current block inherits the first model parameter among the candidate model parameters;

when the inheritance mode of the current block is the chroma fusion mode, in a case that the chroma fusion mode is the chroma fusion merge mode, determining a prediction mode inherited by the current block, and determining the model parameter of the current block according to the prediction mode inherited by the current block and the candidate model parameters; or in a case that the chroma fusion mode is not the chroma fusion merge mode, determining that the MMLM mode is used for the current block and determining that the current block inherits the first model parameter and the classification threshold among the candidate model parameters; and

when the inheritance mode of the current block is the CCMerge mode, determining the prediction mode inherited by the current block, and determining the model parameter of the current block according to the prediction mode inherited by the current block and the candidate model parameters.

13. The method of claim 1, wherein the model parameter of the current block comprises a first model parameter and a second model parameter,

the first model parameter is configured to indicate a scaling parameter when the cross-component prediction mode is used for the current block, and
the second model parameter is configured to indicate an offset parameter when the cross-component prediction mode is used for the current block.

14. The method of any one of claims 1 to 13, further comprising:

determining the first prediction value of the current block based on the cross-component prediction mode;
determining a second prediction value of the current block based on a non-cross-component prediction mode; and
determining a target prediction value of the current block according to the first prediction value and the second prediction value.

15. The method of claim 14, wherein determining the target prediction value of the current block according to the first prediction value and the second prediction value comprises:

determining a first shift factor;
determining an offset value of the current block according to the first shift factor; and
determining the target prediction value of the current block according to the offset value, the first prediction value and the second prediction value.

16. The method of claim 15, wherein determining the target prediction value of the current block according to the offset value, the first prediction value and the second prediction value comprises:
performing weighted calculation according to the offset value, the first prediction value and the second prediction value to determine the target prediction value of the current block.

17. The method of claim 15, wherein determining the target prediction value of the current block according to the offset value, the first prediction value and the second prediction value comprises:

determining a first weighting value and a second weighting value;
performing weighted calculation according to the first weighting value and the first prediction value, as well as the second weighting value and the second prediction value, to determine a third prediction value, and determining a fourth prediction value according to the offset value and the third prediction value; and
performing shift calculation on the fourth prediction value according to the first shift factor to determine the target prediction value of the current block.

18. The method of claim 1, wherein decoding the bitstream to determine the value of the second syntax identification information comprises:
decoding the bitstream based on a context manner to determine the value of the second syntax identification information.

19. The method of claim 1, wherein decoding the bitstream to determine the index identification value of the current block comprises:
decoding the bitstream based on a truncated binary code manner to determine the index identification value of the current block.

20. The method of any one of claims 1 to 19, wherein decoding the bitstream to determine the value of the first syntax identification information comprises:

decoding the bitstream to determine a value of third syntax identification information;
when the third syntax identification information indicates that a chroma fusion mode is used for the current block, decoding the bitstream to determine a value of fourth syntax identification information; and
when the fourth syntax identification information indicates that a linear model chroma fusion mode is not used for the current block, determining the value of the first syntax identification information according to the value of the third syntax identification information and the value of the fourth syntax identification information.

21. The method of claim 20, wherein determining the value of the first syntax identification information according to the value of the third syntax identification information and the value of the fourth syntax identification information comprises:
setting the value of the first syntax identification information to be equal to a sum of the value of the third syntax identification information and the value of the fourth syntax identification information.

22. The method of claim 20, further comprising:
when the third syntax identification information indicates that the chroma fusion mode is not used for the current block, setting the value of the first syntax identification information to be equal to the value of the third syntax identification information.

23. The method of claim 20, further comprising:

when the fourth syntax identification information indicates that the linear model chroma fusion mode is used for the current block, decoding the bitstream to determine a value of fifth syntax identification information; and
determining the value of the first syntax identification information according to the value of the third syntax identification information, the value of the fourth syntax identification information and the value of the fifth syntax identification information.

24. The method of claim 23, further comprising:

when the value of the fifth syntax identification information is a first value, determining that the fifth syntax identification information indicates that a single linear model chroma fusion mode is used for the current block; and
when the value of the fifth syntax identification information is a second value, determining that the fifth syntax identification information indicates that a multiple linear model chroma fusion mode is used for the current block.

25. The method of claim 20, further comprising:

when the value of the third syntax identification information is a first value, determining that the third syntax identification information indicates that the chroma fusion mode is not used for the current block; and
when the value of the third syntax identification information is a second value, determining that the third syntax identification information indicates that the chroma fusion mode is used for the current block.

26. The method of claim 20, further comprising:

when the value of the fourth syntax identification information is a first value, determining that the fourth syntax identification information indicates that the linear model chroma fusion mode is not used for the current block; and
when the value of the fourth syntax identification information is a second value, determining that the fourth syntax identification information indicates that the linear model chroma fusion mode is used for the current block.

27. The method of claim 1, further comprising:

when the value of the first syntax identification information is a first value, determining that the first syntax identification information indicates that a chroma fusion mode is not used for the current block;

when the value of the first syntax identification information is a second value, determining that the first syntax identification information indicates that the weighted chroma fusion mode is used for the current block;

when the value of the first syntax identification information is a third value, determining that the first syntax identification information indicates that a single linear model chroma fusion mode is used for the current block; and

when the value of the first syntax identification information is a fourth value, determining that the first syntax identification information indicates that a multiple linear model chroma fusion mode is used for the current block.

28. The method of claim 27, wherein the first value is 0, the second value is 1, the third value is 2, and the fourth value is 3.

29. The method of any one of claims 1 to 28, further comprising:

decoding the bitstream to determine a value of sixth syntax identification information; and
when the sixth syntax identification information indicates that a non-cross-component prediction mode is used for the current block, continuing performing the operation of decoding the bitstream to determine the value of the first syntax identification information.

30. The method of any one of claims 1 to 28, further comprising:

decoding the bitstream to determine a value of seventh syntax identification information; and
when the seventh syntax identification information indicates that the cross-component prediction mode is used for the current block, continuing performing the operation of decoding the bitstream to determine the value of the first syntax identification information.

31. An encoding method, applied to an encoder, the method comprising:

determining a value of first syntax identification information;
when the first syntax identification information indicates that a weighted chroma fusion mode is used for a current block, determining a value of second syntax identification information;
when the second syntax identification information indicates that a chroma fusion merge mode is used for the current block, constructing a parameter candidate list of the current block; and
determining a model parameter of the current block according to the parameter candidate list, wherein the model parameter is used to determine a first prediction value of the current block based on a cross-component prediction mode.

32. The method of claim 31, further comprising:
when the second syntax identification information indicates that the chroma fusion merge mode is not used for the current block, determining the model parameter of the current block according to a reference sample of the current block, wherein the model parameter is used to determine the first prediction value of the current block based on the cross-component prediction mode.

33. The method of claim 32, further comprising:

determining the reference sample of the current block according to a neighbouring region of the current block, wherein the neighbouring region of the current block comprises at least one of a left neighbouring region of the current block or an above neighbouring region of the current block.

34. The method of claim 32, wherein determining the model parameter of the current block according to the reference sample of the current block comprises:

determining a reconstructed luma value and a reconstructed chroma value of the reference sample; and
performing model parameter calculation according to the reconstructed luma value and the reconstructed chroma value, to obtain the model parameter of the current block

35. The method of claim 31, wherein constructing the parameter candidate list of the current block comprises:

determining neighbouring blocks of the current block;
when the cross-component prediction mode is used for at least one block of the neighbouring blocks, determining a respective model parameter of each of the at least one block to obtain at least one set of first candidate model parameters; and

adding the at least one set of first candidate model parameters into the parameter candidate list.

36. The method of claim 35, wherein the neighbouring blocks comprise: a block neighbouring the current block in a spatial domain and/or a block neighbouring the current block in a temporal domain.

37. The method of claim 35, wherein when the parameter candidate list is in an unfilled state, constructing the parameter candidate list of the current block further comprises:

determining non-neighbouring blocks of the current block;

when the cross-component prediction mode is used for at least one block of the non-neighbouring blocks, determining a respective model parameter of each of the at least one block to obtain at least one set of second candidate model parameters; and

continuing to add the at least one set of second candidate model parameters into the parameter candidate list.

38. The method of claim 37, wherein when the parameter candidate list is in the unfilled state, constructing the parameter candidate list of the current block further comprises:

determining at least one set of third candidate model parameters according to preset parameter information; and

continuing to add the at least one set of third candidate model parameters into the parameter candidate list.

39. The method of claim 38, wherein the preset parameter information at least comprises a preset value of a first model parameter, and the preset value of the first model parameter is at least one of 0, 1/8, -1/8, 2/8, -2/8, or 3/8.

40. The method of any one of claims 31 to 39, wherein the cross-component prediction mode comprises at least one of a Cross-Component Linear Model (CCLM) mode, a Multi-Model Linear Model (MMLM) mode, a Convolutional Cross-Component Model (CCCM) mode, a Gradient Linear Model (GLM) mode, a chroma fusion mode, or a Cross-Component Merge (CCMerge) mode.

41. The method of claim 31, wherein determining the model parameter of the current block according to the parameter candidate list comprises:

performing cost calculation on at least two sets of candidate model parameters in the parameter candidate list to determine a respective cost value of each of the at least two sets of candidate model parameters; and

determining a minimum cost value from cost values of the at least two sets of candidate model parameters, and determining the model parameter of the current block according to a set of candidate model parameters corresponding to the minimum cost value.

42. The method of claim 41, further comprising:

determining an index identification value of the current block, wherein the index identification value is configured to indicate an index number of the set of candidate model parameters corresponding to the minimum cost value in the parameter candidate list; and

encoding the index identification value, and signalling obtained encoded bits into a bitstream.

43. The method of claim 41, wherein determining the model parameter of the current block according to the set of candidate model parameters corresponding to the minimum cost value comprises:

determining an inheritance mode of the current block and corresponding candidate model parameters according to the set of candidate model parameters corresponding to the minimum cost value; and

determining the model parameter of the current block according to the inheritance mode of the current block and the candidate model parameters.

44. The method of claim 43, wherein determining the model parameter of the current block according to the inheritance mode of the current block and the candidate model parameters comprises:

when the inheritance mode of the current block is the CCLM mode, determining that the current block inherits a first model parameter among the candidate model parameters;

when the inheritance mode of the current block is the MMLM mode, determining that the current block inherits the first model parameter and a classification threshold among the candidate model parameters;

when the inheritance mode of the current block is the CCCM mode, determining that the current block inherits a convolution parameter and the classification threshold among the candidate model parameters;

when the inheritance mode of the current block is the GLM mode, in a case that the GLM mode is a three-parameter mode, determining that the current block inherits a gradient index value, the first model parameter and a second model parameter among the candidate model parameters; or in a case that the GLM mode is a two-parameter mode, determining that the current block inherits the first model parameter among the candidate model parameters;

when the inheritance mode of the current block is the chroma fusion mode, in a case that the chroma fusion mode is the chroma fusion merge mode, determining a prediction mode inherited by the current block, and determining the model parameter of the current block according to the prediction mode inherited by the current block and the candidate model parameters; or in a case that the chroma fusion mode is not the chroma fusion merge mode, determining that the MMLM mode is used for the current block and determining that the current block inherits the first model parameter and the classification threshold among the candidate model parameters; and

when the inheritance mode of the current block is the CCMerge mode, determining the prediction mode inherited by the current block, and determining the model parameter of the current block according to the prediction mode inherited by the current block and the candidate model parameters.

45. The method of claim 31, wherein the model parameter of the current block comprises a first model parameter and a second model parameter,

the first model parameter is configured to indicate a scaling parameter when the cross-component prediction mode is used for the current block, and

the second model parameter is configured to indicate an offset parameter when the cross-component prediction mode is used for the current block.

46. The method of any one of claims 31 to 45, further comprising:

determining the first prediction value of the current block based on the cross-component prediction mode;

determining a second prediction value of the current block based on a non-cross-component prediction mode; and

determining a target prediction value of the current block according to the first prediction value and the second prediction value.

47. The method of claim 46, wherein determining the target prediction value of the current block according to the first prediction value and the second prediction value comprises:

determining a first shift factor;

determining an offset value of the current block according to the first shift factor; and

determining the target prediction value of the current block according to the offset value, the first prediction value and the second prediction value.

48. The method of claim 47, wherein determining the target prediction value of the current block according to the offset value, the first prediction value and the second prediction value comprises:

performing weighted calculation according to the offset value, the first prediction value and the second prediction value to determine the target prediction value of the current block.

49. The method of claim 47, wherein determining the target prediction value of the current block according to the offset value, the first prediction value and the second prediction value comprises:

determining a first weighting value and a second weighting value;

performing weighted calculation according to the first weighting value and the first prediction value, as well as the second weighting value and the second prediction value, to determine a third prediction value, and determining a fourth prediction value according to the offset value and the third prediction value; and

performing shift calculation on the fourth prediction value according to the first shift factor to determine the target prediction value of the current block.

50. The method of claim 31, further comprising:
encoding the value of the second syntax identification information, and signalling obtained encoded bits into a bitstream.

51. The method of claim 51, further comprising:
encoding the value of the second syntax identification information based on a context manner, and signalling the obtained encoded bits into the bitstream.

52. The method of claim 42, further comprising:
encoding the index identification value based on a truncated binary code manner, and signalling the obtained encoded bits into the bitstream.

53. The method of any one of claims 31 to 52, wherein determining the value of the first syntax identification information comprises:

determining a value of third syntax identification information;
when the third syntax identification information indicates that a chroma fusion mode is used for the current block, determining a value of fourth syntax identification information; and
when the fourth syntax identification information indicates that a linear model chroma fusion mode is not used for the current block, determining the value of the first syntax identification information according to the value of the third syntax identification information and the value of the fourth syntax identification information.

54. The method of claim 53, wherein determining the value of the first syntax identification information according to the value of the third syntax identification information and the value of the fourth syntax identification information comprises:
setting the value of the first syntax identification information to be equal to a sum of the value of the third syntax identification information and the value of the fourth syntax identification information.

55. The method of claim 53, further comprising:
when the third syntax identification information indicates that the chroma fusion mode is not used for the current block, setting the value of the first syntax identification information to be equal to the value of the third syntax identification information.

56. The method of claim 53, further comprising:

when the fourth syntax identification information indicates that the linear model chroma fusion mode is used for the current block, determining a value of fifth syntax identification information; and
determining the value of the first syntax identification information according to the value of the third syntax identification information, the value of the fourth syntax identification information and the value of the fifth syntax identification information.

57. The method of claim 53, wherein determining the value of the fifth syntax identification information comprises:

when a single linear model chroma fusion mode is used for the current block is used for the current block, determining that the value of fifth syntax identification information is a first value; and
when a multiple linear model chroma fusion mode is used for the current block, determining that the value of the fifth syntax identification information is a second value.

58. The method of claim 57, further comprising:
encoding the value of the fifth syntax identification information, and signalling obtained encoded bits into a bitstream.

59. The method of claim 53, wherein determining the value of the third syntax identification information comprises:

when the chroma fusion mode is not used for the current block, determining that the value of the third syntax identification information is a first value; and
when the chroma fusion mode is used for the current block, determining that the value of the third syntax identification information is a second value.

**60.** The method of claim 59, further comprising:
encoding the value of the third syntax identification information, and signalling obtained encoded bits into a bitstream.

**61.** The method of claim 53, wherein determining the value of the fourth syntax identification information comprises:

when the linear model chroma fusion mode is not used for the current block, determining that the value of the fourth syntax identification information is a first value; and
when the linear model chroma fusion mode is used for the current block, determining that the value of the fourth syntax identification information is a second value.

**62.** The method of claim 61, further comprising:
encoding the value of the fourth syntax identification information, and signalling obtained encoded bits into a bitstream.

**63.** The method of claim 31, further comprising:

when a chroma fusion mode is not used for the current block, determining that the value of the first syntax identification information is a first value;
when the weighted chroma fusion mode is used for the current block, determining that the value of the first syntax identification information is a second value;
when a single linear model chroma fusion mode is used for the current block, determining that the value of the first syntax identification information is a third value; and
when a multiple linear model chroma fusion mode is used for the current block, determining that the value of the first syntax identification information is a fourth value.

**64.** The method of claim 63, wherein the first value is 0, the second value is 1, the third value is 2, and the fourth value is 3.

**65.** The method of claim 31, further comprising:
encoding the value of the first syntax identification information, and signalling obtained encoded bits into a bitstream.

**66.** The method of any one of claims 31 to 65, further comprising:

determining a value of sixth syntax identification information; and
when the sixth syntax identification information indicates that a non-cross-component prediction mode is used for the current block, continuing performing the operation of determining the value of the first syntax identification information.

**67.** The method of claim 66, further comprising:
encoding the value of the sixth syntax identification information, and signalling obtained encoded bits into a bitstream.

**68.** The method of any one of claims 31 to 65, further comprising:

determining a value of seventh syntax identification information; and
when the seventh syntax identification information indicates that the cross-component prediction mode is used for the current block, continuing performing the operation of determining the value of the first syntax identification information.

**69.** The method of claim 68, further comprising:
encoding the value of the seventh syntax identification information, and signalling obtained encoded bits into a bitstream.

**70.** A bitstream, wherein the bitstream is generated by performing bit encoding according to information to be encoded, and the information to be encoded comprises at least one of:

an index identification value of a current block, a value of first syntax identification information, a value of second syntax identification information, a value of third syntax identification information, a value of fourth syntax identification information, a value of fifth syntax identification information, a value of sixth syntax identification information; or a value of seventh syntax identification information,

wherein the first syntax identification information is configured to indicate whether a weighted chroma fusion mode is used for a current block, the second syntax identification information is configured to indicate whether a chroma fusion merge mode is used for the current block, the third syntax identification information is configured to indicate whether a chroma fusion mode is used for the current block, the fourth syntax identification information is configured to indicate whether a linear model chroma fusion mode is used for the current block, the fifth syntax identification information is configured to indicate that a single linear model chroma fusion mode or a bilinear model chroma fusion mode is used for the current block, the sixth syntax identification information is configured to indicate whether a non-cross-component prediction mode is used for the current block, and the seventh syntax identification information is configured to indicate whether a cross-component prediction mode is used for the current block.

71. An encoder comprising a first determination unit, wherein

the first determination unit is configured to: determine a value of first syntax identification information; and when the first syntax identification information indicates that a weighted chroma fusion mode is used for a current block, determine a value of second syntax identification information,
wherein the first determination unit is further configured to: when the second syntax identification information indicates that a chroma fusion merge mode is used for the current block, construct a parameter candidate list of the current block; and determine a model parameter of the current block according to the parameter candidate list, wherein the model parameter is used to determine a first prediction value of the current block based on a cross-component prediction mode.

72. An encoder comprising a first memory and a first processor, wherein

the first memory is configured to store a computer program executable on the first processor, and
the first processor is configured to perform the method of any one of claims 31 to 69 when executing the computer program.

73. A decoder comprising a decoding unit and a second determination unit, wherein

the decoding unit is configured to: decode a bitstream to determine a value of first syntax identification information; and when the first syntax identification information indicates that a weighted chroma fusion mode is used for a current block, decode the bitstream to determine a value of second syntax identification information,
wherein the decoding unit is further configured to: when the second syntax identification information indicates that a chroma fusion merge mode is used for the current block, decode the bitstream to determine an index identification value of the current block; and
the second determination unit is configured to: construct a parameter candidate list of the current block, and determine a model parameter of the current block according to the parameter candidate list and the index identification value, wherein the model parameter is used to determine a first prediction value of the current block based on a cross-component prediction mode.

74. A decoder comprising a second memory and a second processor, wherein

the second memory is configured to store a computer program executable on the second processor, and
the second processor is configured to perform the method of any one of claims 1 to 30 when executing the computer program.

75. A computer-readable storage medium having stored thereon a computer program which, when executed, implements the method of any one of claims 1 to 30, or implements the method of any one of claims 31 to 69.

**FIG. 1**

**FIG. 2A**

**FIG. 2B**

**FIG. 3**

**FIG. 4**

**FIG. 5**

Input video

101

Transform and
quantization unit

Quantized transform
coefficient

100

Inverse transform
and inverse
quantization unit

106

Divided into
coding blocks

102

Intra
estimation unit

Filter control
analysis unit

107

Filter
control
data

109

Encoding
unit

Output
bitstream

103

Inter/intra
selection

Intra
prediction unit

Filtering unit

108

Intra
prediction data

104

Motion
compensation unit

Motion data

Motion
estimation unit

105

Decoded
picture
buffer unit

110

Output
video
signal

**FIG. 6**

**FIG. 7**

FIG. 8

| The bitstream is decoded to determine a value of first syntax identification information | S901 |

↓

| When the first syntax identification information indicates that a weighted chroma fusion mode is used for a current block, the bitstream is decoded to determine a value of second syntax identification information | S902 |

↓

| When the second syntax identification information indicates that a chroma fusion derivation mode is used for the current block, the bitstream is decoded to determine an index identification value of the current block | S903 |

↓

| A parameter candidate list of the current block is constructed, and a model parameter of the current block is determined according to the parameter candidate list and the index identification value. The model parameter is used to determine a first prediction value of the current block based on a cross-component prediction mode | S904 |

**FIG. 9**

| The first prediction value of the current block based on the across-component prediction mode is determined | S1001 |

↓

| A second prediction value of the current block based on the non-across-component prediction mode is determined | S1002 |

↓

| A target prediction value of the current block is determined according to the first prediction value and the second prediction value | S1003 |

**FIG. 10**

A value of first syntax identification information is determined — S1101

When the first syntax identification information indicates that a weighted chroma fusion mode is used for a current block, a value of second syntax identification information is determined — S1102

When the second syntax identification information indicates that a chroma fusion derivation mode is used for the current block, a parameter candidate list of the current block is constructed — S1103

A model parameter of the current block is determined according to the parameter candidate list. The model parameter is used to determine a first prediction value of the current block based on a cross-component prediction mode — S1104

## FIG. 11

A value of first syntax identification information is determined — S1101

When the first syntax identification information indicates that a weighted chroma fusion mode is used for a current block, a value of second syntax identification information is determined — S1102

When the second syntax identification information indicates that a chroma fusion derivation mode is used for the current block, a parameter candidate list of the current block is constructed — S1103

An index identification value of the current block is determined according to the parameter candidate list. The index identification value is configured to indicate an index number of a set of candidate model parameters corresponding to a minimum cost value in the parameter candidate list — S1201

The value of the first syntax identification information, the value of the second syntax identification information and the index identification value are encoded, and the obtained encoded bits are signalled into a bitstream — S1202

## FIG. 12

130

Encoder

| First determination unit 1301 | Encoding unit 1302 |

First prediction unit 1303

**FIG. 13**

130

Encoder

First communication interface 1401

1404

First processor 1403

First memory 1402

**FIG. 14**

**EP 4 704 417 A1**

**FIG. 15**

**FIG. 16**

**FIG. 17**

56

# EP 4 704 417 A1

## INTERNATIONAL SEARCH REPORT

| | International application No. |
|---|---|
| | **PCT/CN2023/091305** |

**A.    CLASSIFICATION OF SUBJECT MATTER**

H04N19/103(2014.01)i;  H04N19/159(2014.01)i;  H04N19/186(2014.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, JVET, CNKI: 色度融合, 色度导出, 跨分量线性预测, 跨分量预测, 加权, 候选列表, 预测, 参考, 模型, 索引, 色度, 亮度, 语法, 标志, chroma fusion, cross-component merge, CCMerge, cross-component linear model, CCLM, weight, candidate list, prediction, reference, model, index, chroma, luma, syntax, flag

**C.    DOCUMENTS CONSIDERED TO BE RELEVANT**

| Category* | Citation of document, with indication, where appropriate, of the relevant passages | Relevant to claim No. |
|---|---|---|
| X | COBAN, M. et al. "Algorithm description of Enhanced Compression Model 8 (ECM 8)" *Joint Video Experts Team (JVET) of ITU-T SG 16 WP 3 and ISO/IEC JTC 1/SC 29, 29th Meeting, by teleconference, 11-20 January 2023, Document: JVET-AC2025,* 06 April 2023 (2023-04-06), section 3.1.6 | 70, |
| A | COBAN, M. et al. "Algorithm description of Enhanced Compression Model 8 (ECM 8)" *Joint Video Experts Team (JVET) of ITU-T SG 16 WP 3 and ISO/IEC JTC 1/SC 29, 29th Meeting, by teleconference, 11-20 January 2023, Document: JVET-AC2025,* 06 April 2023 (2023-04-06), section 3.1.6 | 1-69, 71-75 |
| X | ZHOU, Chuan et al. "EE2-related: On Chroma Fusion improvement" *Joint Video Experts Team (JVET) of ITU-T SG 16 WP 3 and ISO/IEC JTC 1/SC 29, 28th Meeting, Mainz, DE, 20-28 October 2022, Document: JVET-AB0139,* 21 October 2022 (2022-10-21), sections 1-2 | 70 |

☑ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **11 January 2024** | **12 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/091305** |

**C.   DOCUMENTS CONSIDERED TO BE RELEVANT**

| Category* | Citation of document, with indication, where appropriate, of the relevant passages | Relevant to claim No. |
| --- | --- | --- |
| A | ZHOU, Chuan et al. "EE2-related: On Chroma Fusion improvement" *Joint Video Experts Team (JVET) of ITU-T SG 16 WP 3 and ISO/IEC JTC 1/SC 29, 28th Meeting, Mainz, DE, 20-28 October 2022, Document: JVET-AB0139,* 21 October 2022 (2022-10-21), sections 1-2 | 1-69, 71-75 |
| X | TSAI, C. M. et al. "Non-EE2: Cross-component merge mode for chroma intra coding" *Joint Video Experts Team (JVET) of ITU-T SG 16 WP 3 and ISO/IEC JTC 1/SC 29,29th Meeting, by teleconference, 11-20 January 2023, Document: JVET-AC0315,* 16 January 2023 (2023-01-16), sections 1-2 | 70 |
| A | TSAI, C. M. et al. "Non-EE2: Cross-component merge mode for chroma intra coding" *Joint Video Experts Team (JVET) of ITU-T SG 16 WP 3 and ISO/IEC JTC 1/SC 29,29th Meeting, by teleconference, 11-20 January 2023, Document: JVET-AC0315,* 16 January 2023 (2023-01-16), sections 1-2 | 1-69, 71-75 |
| A | CN 111698501 A (HANGZHOU HIKVISION DIGITAL TECHNOLOGY CO., LTD.) 22 September 2020 (2020-09-22) entire document | 1-75 |
| A | WO 2021004152 A1 (GUANGDONG OPPO MOBILE TELECOMMUNICATIONS CORP., LTD.) 14 January 2021 (2021-01-14) entire document | 1-75 |

Form PCT/ISA/210 (second sheet) (July 2022)

**INTERNATIONAL SEARCH REPORT**
Information on patent family members

International application No.

**PCT/CN2023/091305**

| Patent document cited in search report | | | Publication date (day/month/year) | Patent family member(s) | | | Publication date (day/month/year) |
|---|---|---|---|---|---|---|---|
| CN | 111698501 | A | 22 September 2020 | | None | | |
| WO | 2021004152 | A1 | 14 January 2021 | EP | 3972251 | A1 | 23 March 2022 |
| | | | | EP | 3972251 | A4 | 24 August 2022 |
| | | | | JP | 2022539786 | A | 13 September 2022 |
| | | | | KR | 20220030950 | A | 11 March 2022 |
| | | | | US | 2022116591 | A1 | 14 April 2022 |

Form PCT/ISA/210 (patent family annex) (July 2022)